# EUROPEAN PATENT SPECIFICATION

(11) **EP 3 584 424 B1**
(45) Date of publication and mention of the grant of the patent: **10.08.2022**
(21) Application number: 17911470.7
(22) Date of filing: 30.05.2017
(51) Int. Cl.: F02B 39/00, F04D 29/16, B29C 65/14, B29C 65/08, F02B 33/40, B29C 65/00, B29C 65/48, B29C 65/12, B29C 65/72, F04D 17/10, F04D 29/42, F04D 29/62, B29C 65/56, B29L 31/26, B29L 31/00

(54) **METHOD FOR MANUFACTURING SUPERCHARGER COMPRESSOR HOUSING**
VERFAHREN ZUR HERSTELLUNG EINES AUFLADUNGSKOMPRESSORGEHÄUSES
PROCÉDÉ DE FABRICATION DE BOÎTIER DE COMPRESSEUR DE COMPRESSEUR DE SURALIMENTATION

(43) Date of publication of application: 25.12.2019
(73) Proprietor: TPR CO., LTD., Tokyo 100-0005 (JP)
(72) Inventor: INOUE, Takashi, Tokyo 100-0005 (JP); NOBE, Takahiro, Tokyo 100-0005 (JP); SATO, Toshihiro, Koza-gun Kanagawa 253-0101 (JP)
(74) Representative: Gill Jennings & Every LLP
(86) International application number: PCT/JP2017/020094
(87) International publication number: WO 2018/220713

(56) References cited:
- EP-A1- 2 607 134
- EP-A1- 2 998 504
- EP-A1- 3 106 629
- WO-A1-2013/014743
- WO-A1-2016/151747
- WO-A1-2016/151747
- DE-A1-102012 104 479
- JP-A- 2011 153 570
- JP-A- 2011 163 239
- JP-A- 2013 036 440
- JP-A- 2017 082 666
- US-A1- 2008 017 280
- US-A1- 2015 246 480
- US-A1- 2016 356 282

## Description

### {Technical Field}

The present invention relates to a method for manufacturing a supercharger compressor housing, and to a supercharger compressor housing.

### {Background Art}

As an auxiliary apparatus configured to efficiently compress an intake air sucked into an internal combustion engine, a supercharger is used. The supercharger includes a compressor housing, a compressor impeller supported inside the compressor housing so as to be freely rotatable, and driving means connected to the compressor impeller by way of a shaft. As the driving means, there has been used a turbine impeller, which is rotated by an exhaust gas discharged from the internal combustion engine, the internal combustion engine, an electric motor, or other means.

When the compressor impeller is rotated by the driving means, the intake air is fed into the internal combustion engine after being compressed. At this time, a plurality of blades that are formed on an edge portion of the compressor impeller to extend along an inner wall surface (shroud surface) of an intake passage in the compressor housing suck and forcibly feed the intake air. Therefore, in order to improve compression efficiency for the intake air, a gap that is formed between the shroud surface of the compressor housing and distal ends of the blades of the compressor impeller is required to be reduced as much as possible.

However, when the gap is reduced, for example, contact of the blade with the shroud surface due to vibration, inclination of a rotary shaft of the compressor impeller, and other factors may cause the damage of the compressor impeller. Therefore, as the supercharger compressor housing, there has hitherto been used a compressor housing in which an abradable seal made of a resin material or other materials, which is softer than the blades, is used as a member forming the shroud surface.

There have hitherto been proposed various types of compressor housings using the abradable seal described above. The compressor housings are mainly classified into the following three types in terms of manufacturing processes:
(1) Thermal spraying method
   A compressor housing including a thermally sprayed layer functioning as the abradable seal, which is formed directly on a compressor housing main body portion by thermal spraying (see, for example, PTL 1);
(2) Insert-molding method
   A compressor housing including an abradable seal, which is formed directly on a compressor housing main body portion by insert-molding (see, for example, PLT 2); and
(3) Press-fitting method
   A compressor housing including an abradable seal, which is formed and processed into a predetermined shape in advance and is fixed to an inner peripheral portion of a compressor housing main body portion by press-fitting or other methods (see, for example, PLT 3).

### {Citation List}

### {Patent Literature}

{PTL 1} JP 03-068529 U
[PTL 2} JP 2004-299381 A
[PTL 3} WO 2016-136037 A1

### {Summary of Invention}

### {Technical Problem}

However, when the compressor housing is manufactured by the thermal spraying method or the insert-molding method, an expensive and large-size manufacturing facility such as a thermal spraying apparatus or an injection-molding apparatus is required. Further, when the press-fitting method is employed, the press-fitted abradable seal is deformed due to creeping, with the result that drop or detachment of the abradable seal or other failures are liable to occur.

Meanwhile, as exemplified in Patent Literature 3, an anchor effect can be attained by causing a bulging portion formed on an outer peripheral portion of the abradable seal to bulge into a groove portion having a center axis parallel to a radial direction of the compressor housing main body portion through compression-expansion deformation of the abradable seal. However, even in this case, a bulging amount of the bulging portion (length of the bulging portion located inside the groove portion) cannot be increased by a large amount. The reason is as follows. When the bulging amount is increased so as to attain a higher anchor effect, the press-fitting of the abradable seal into the inner peripheral portion of the compressor housing main body portion becomes difficult. In addition, the abradable seal is deformed or damaged by a pressure applied at the time of press-fitting.

The present invention has been made in view of the circumstances described above, and an object of this invention is to provide a method for manufacturing a supercharger compressor housing , which enables manufacture of a compressor housing including an abradable seal with a simpler manufacturing facility in comparison to a thermal spraying apparatus or an injection-molding apparatus and enables forming of a projecting portion having a larger length in an axial direction of a groove portion by deforming part of the abradable seal between the groove portion formed on a compressor housing main body portion side and the abradable seal. Another object of this invention is to provide a supercharger compressor housing manufactured thereby.

DE102012104479 and US2016/356282 disclose example methods for manufacturing compressor housings using welding techniques.

WO2016/151747 discloses an impeller cover with a machine abradable seal section which has a shroud surface, a cover body which covers the impeller, and a filling material interposed between the abradable seal section and the cover body.

EP2998504 discloses a system for welding a rotor wheel to a shaft.

US2008/017280 discloses a process for repairing turbine engine components using welding techniques.

### {Solution to Problem}

The above-mentioned object is achieved by embodiments of the present invention to be described below. That is:
According to the present invention, provided is a method for manufacturing a supercharger compressor housing according to claim 1.

In one aspect of the method for manufacturing the supercharger compressor housing according to the present invention, the local heating step is carried out through use of an infrared welding machine.

In a comparative example, the local heating step is carried out through use of an ultrasonic welding machine.

In an embodiment of the method for manufacturing the supercharger compressor housing according to the present invention, it is preferred that the groove portion comprises a radial groove portion having a center axis with an angle equal to or larger than -45 degrees and equal to or smaller than 60 degrees with respect to a radial direction of the compressor housing main body portion, and that, in the mounting and fixing step, the heating target region, which has been heated locally, is inserted into the radial groove portion while being deformed.

In still another embodiment of the method for manufacturing the supercharger compressor housing according to the present invention, it is preferred that the groove portion includes the radial groove portion and an axial groove portion formed at a position in proximity to the radial groove portion and having a center axis with an angle larger than -30 degrees and smaller than 30 degrees with respect to an axial direction of the compressor housing main body portion, and that, in the mounting and fixing step, the single heating target region, which has been heated locally, is inserted into both the radial groove portion and the axial groove portion while being deformed.

In still another embodiment of the method for manufacturing the supercharger compressor housing according to the present invention, it is preferred that a sealing member arrangement step is carried out to arrange at least one sealing member selected from an O-ring and a sealing material on at least one surface selected from the mounting and fixing surface and a part of the surface of the abradable seal facing to the mounting and fixing surface, before the mounting and fixing step is carried out.

In still another embodiment of the method for manufacturing the supercharger compressor housing according to the present invention, it is preferred that a fine groove forming step is carried out to form a fine groove by radiating a laser beam onto at least part of an inner wall surface of the groove portion while scanning the laser beam, before the mounting and fixing step is carried out.

Further disclosed is a supercharger compressor housing, including at least: an abradable seal having a ring shape; and a compressor housing main body portion having a ring shape and a mounting and fixing surface as part of an inner wall surface, the abradable seal being mounted and fixed on the mounting and fixing surface, wherein a groove portion is formed in the mounting and fixing surface, and wherein a projecting portion forming a part of the abradable seal, is arranged in the groove portion.

In one example of the supercharger compressor housing, it is preferred that the projecting portion is a thermally deformed projecting portion.

In another example of the supercharger compressor housing, it is preferred that, in an entire interface formed by the mounting and fixing surface and a part of the surface of the abradable seal facing to the mounting and fixing surface, a first interface region is formed by a first region of an inner wall surface of the groove portion, where the first region closely contacts with a surface of the projecting portion, and a second region of the surface of the projecting portion, where the second region closely contacts with the inner surface, in the first interface region, a surface roughness shape of the mounting and fixing surface matches a surface roughness shape of a part of the surface of the abradable seal facing to the mounting and fixing surface, and that in a second interface region obtained by excluding the first interface region from the entire interface, the second interface region includes a portion in which the surface roughness shape of the mounting and fixing surface does not match the surface roughness shape of a part of the surface of the abradable seal facing to the mounting and fixing surface.

In still another example of the supercharger compressor housing, it is preferred that the abradable seal includes a thermally deformed portion and a non-thermally deformed portion.

In still another example of the supercharger compressor housing, it is preferred that a length L of the projecting portion arranged in the groove portion is equal to or larger than 0.15 mm.

In still another example of the supercharger compressor housing, it is preferred that a distal end of the projecting portion and a bottom of the groove portion be separated from each other, and that a surface of the distal end has a surface texture different from that of a portion of the surface of the abradable seal facing the mounting and fixing surface excluding the surface of the distal end.

In still another embodiment of the method for manufacturing the supercharger compressor housing according to the present invention, it is preferred that the groove portion include a radial groove portion having a center axis with an angle equal to or larger than -45 degrees and equal to or smaller than 60 degrees with respect to a radial direction of the compressor housing main body portion.

In still another embodiment of the method for manufacturing the supercharger compressor housing according to the present invention, it is preferred that the groove portion include the radial groove portion and an axial groove portion, which is formed at a position in proximity to the radial groove portion and has a center axis with an angle larger than -30 degrees and smaller than 30 degrees with respect to an axial direction of the compressor housing main body portion.

In still another embodiment of the method for manufacturing the supercharger compressor housing according to the present invention, it is preferred that at least one sealing member selected from an O-ring and a sealing material be arranged at an interface between the compressor housing main body portion and the abradable seal.

In still another embodiment of the method for manufacturing the supercharger compressor housing according to the present invention, it is preferred that the groove portion include a radial groove portion having a center axis with an angle equal to or larger than -45 degrees and equal to or smaller than 45 degrees with respect to the radial direction of the compressor housing, and that at least one sealing member selected from an O-ring and a sealing material be arranged at the interface between the compressor housing main body portion and the abradable seal.

In still another embodiment of the method for manufacturing the supercharger compressor housing according to the present invention, it is preferred that a fine groove be formed in at least part of the inner wall surface of the groove portion.

### {Advantageous Effects of Invention}

According to the present invention, it is possible to provide a method for manufacturing a supercharger compressor housing , which enables manufacture of a compressor housing including an abradable seal with a simpler manufacturing facility in comparison to a thermal spraying apparatus or an injection-molding apparatus and enables forming of a projecting portion having a larger length in an axial direction of a groove portion by deforming part of the abradable seal between the groove portion formed on a compressor housing main body portion side and the abradable seal, and it is possible to provide a supercharger compressor housing , which is manufactured by this method.

### {Brief Description of Drawings}

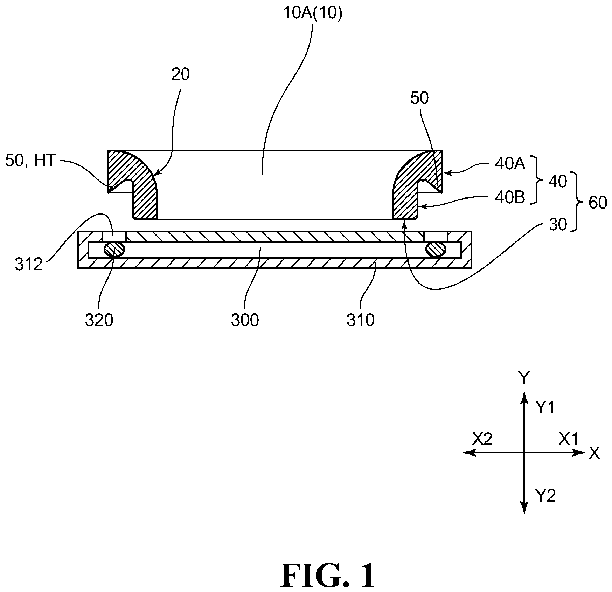

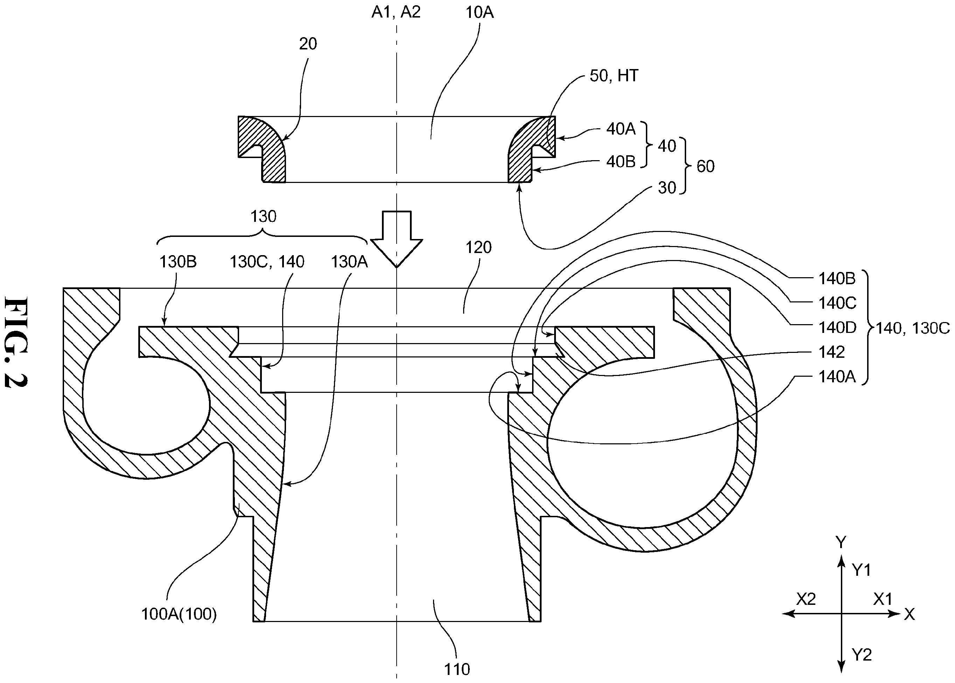

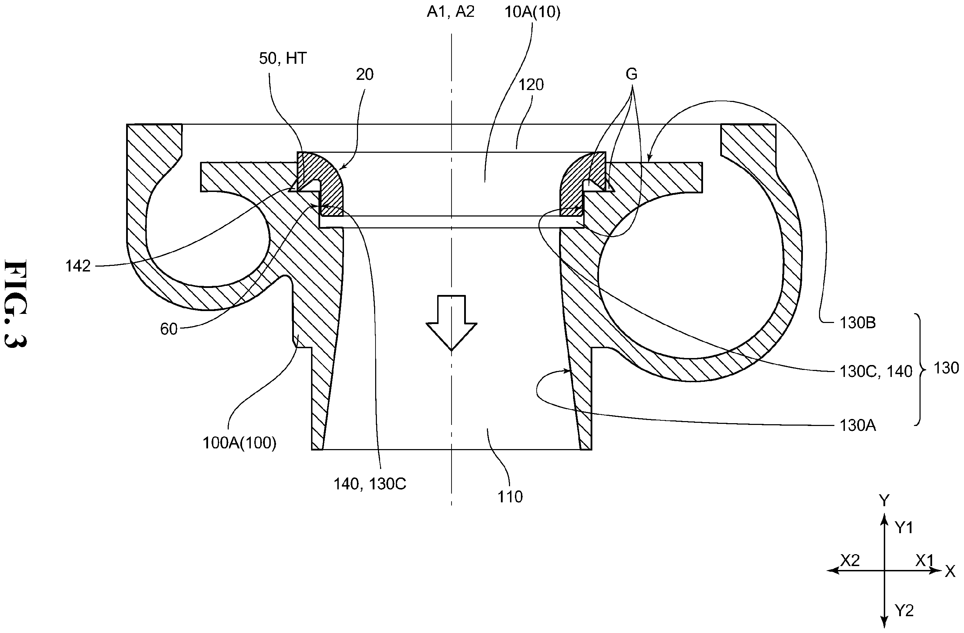

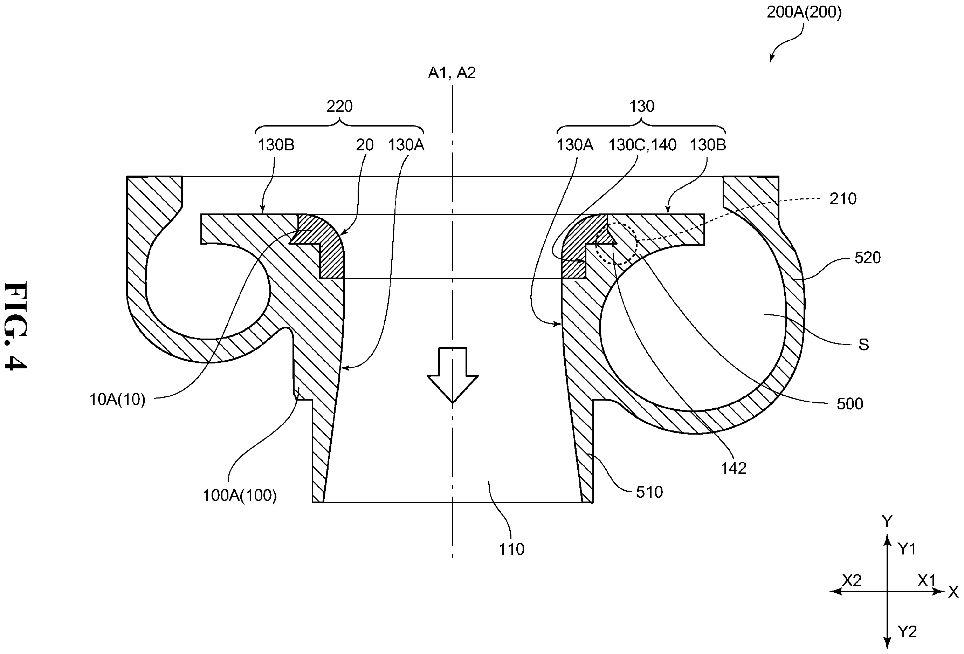

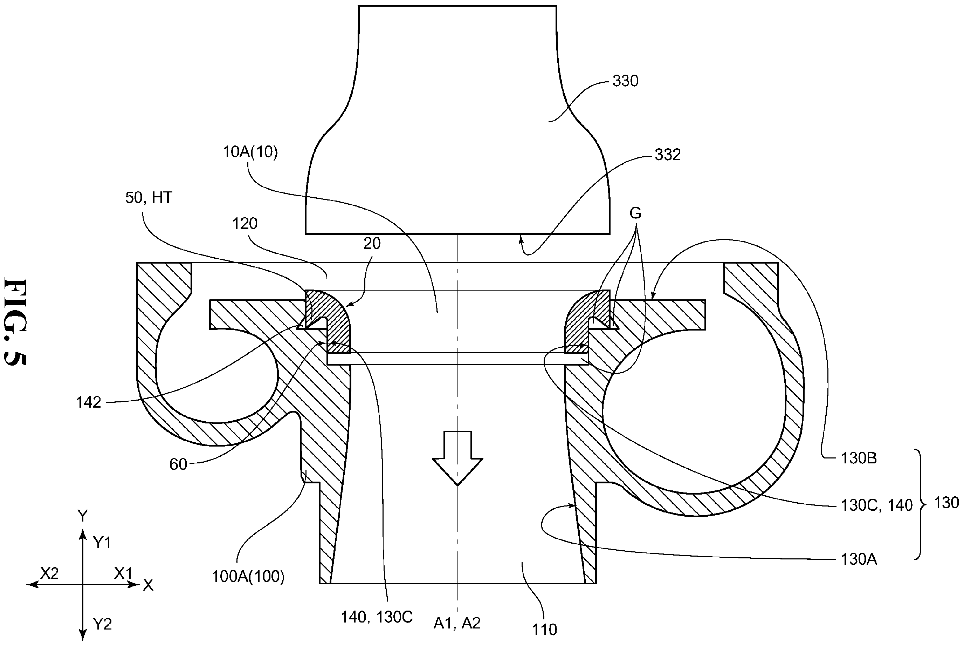

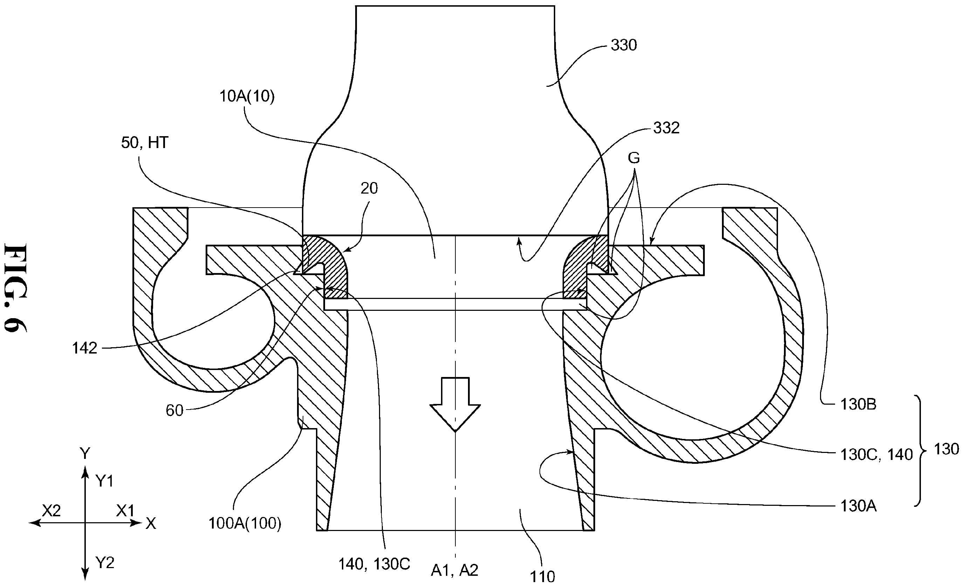

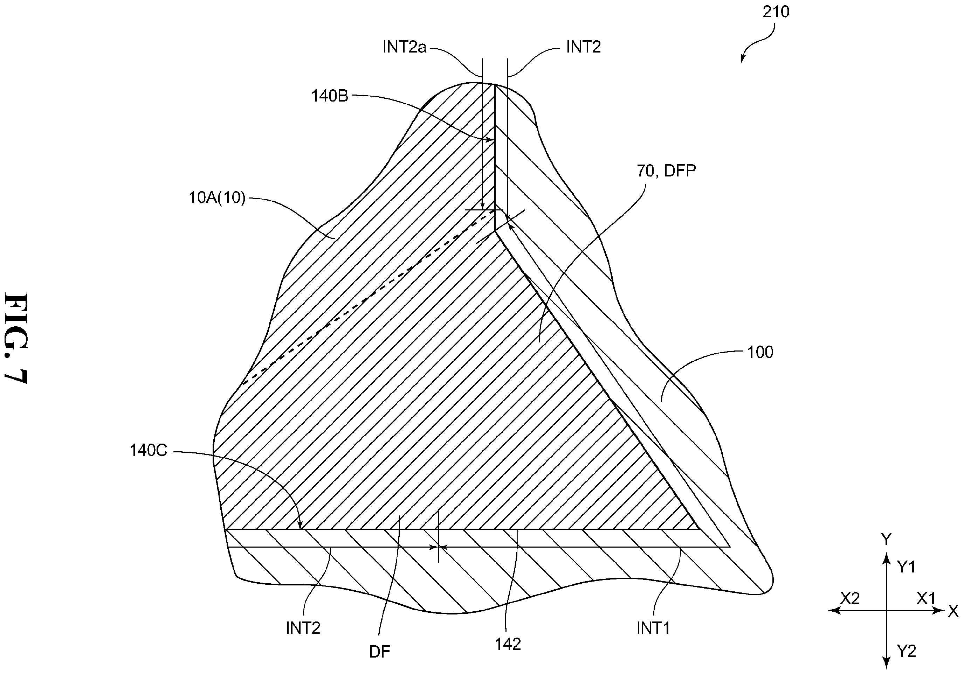

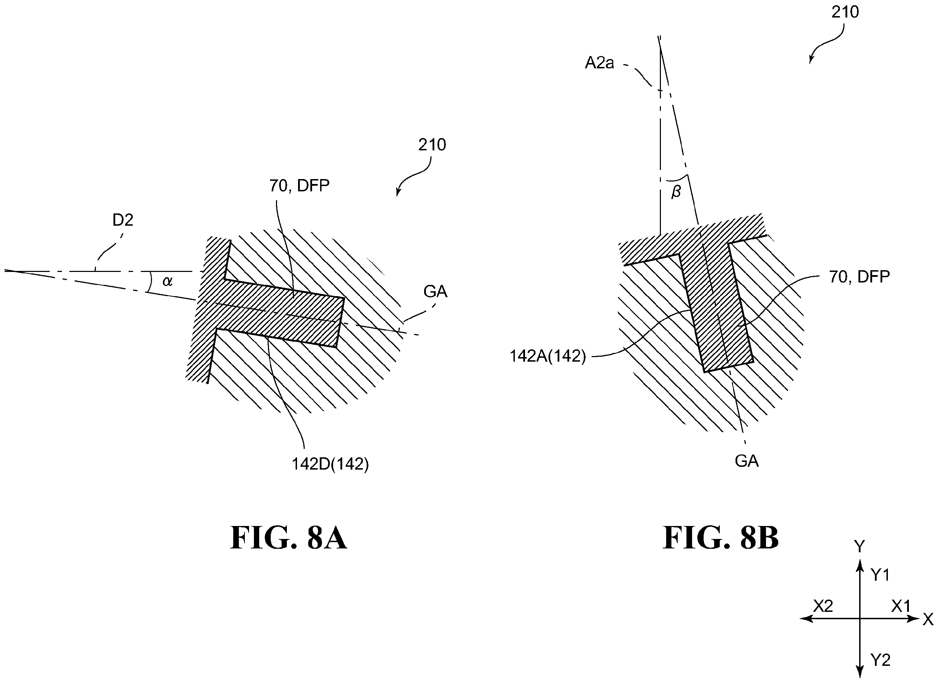

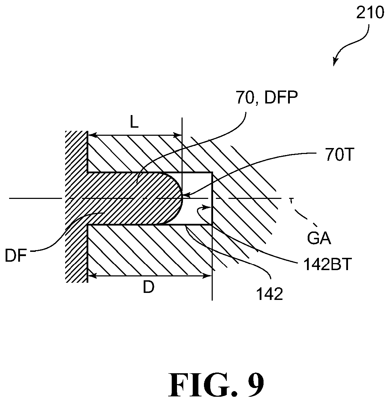

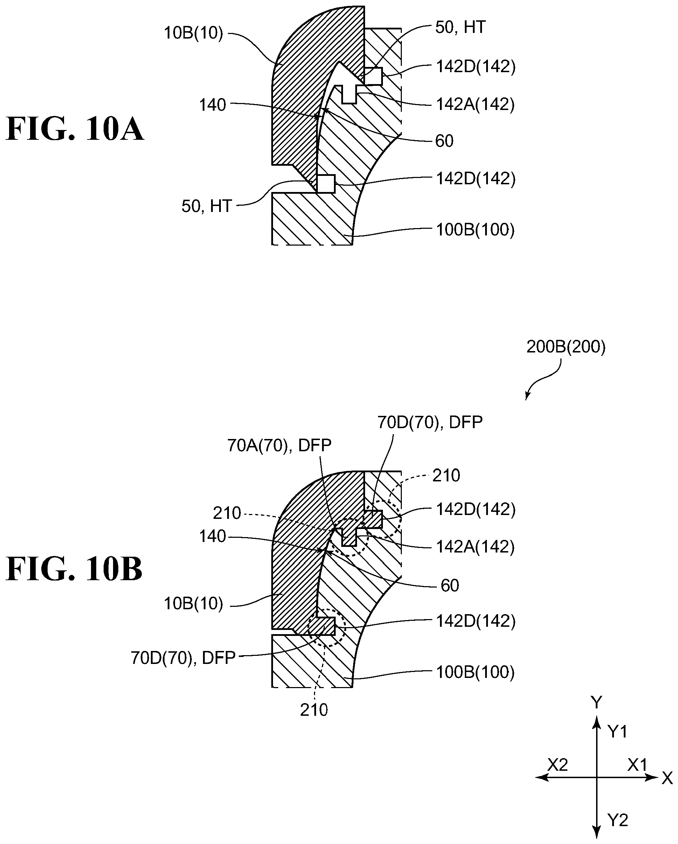

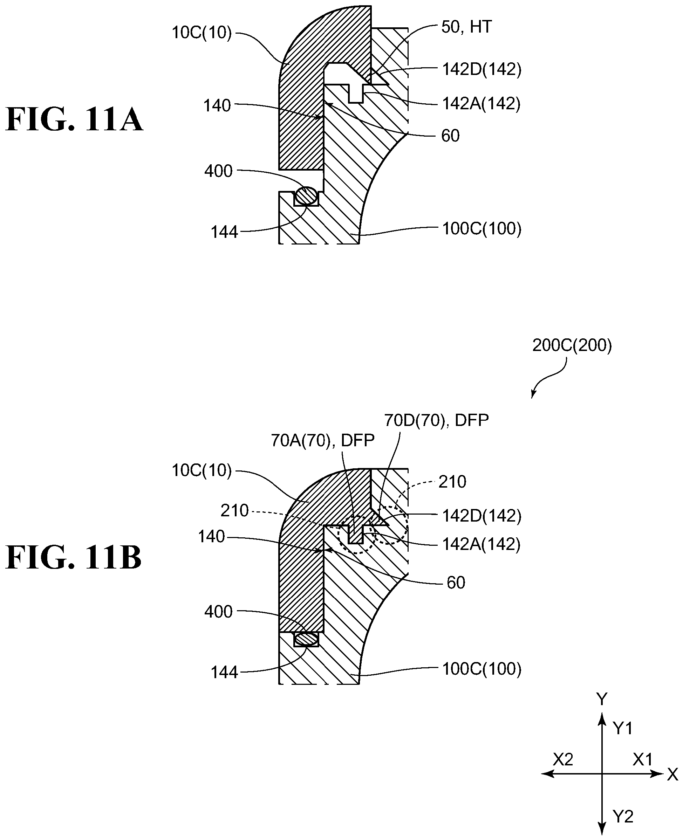

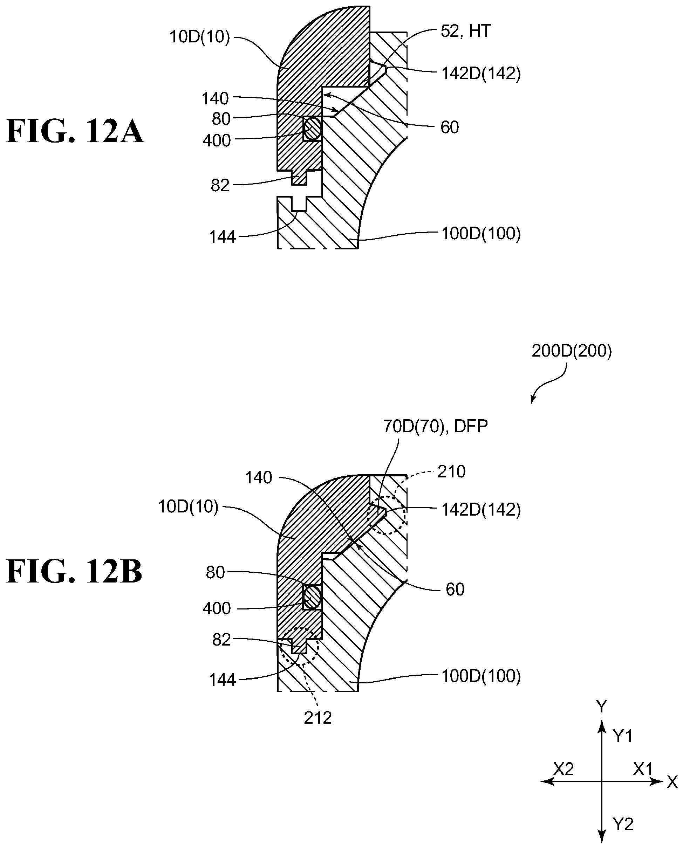

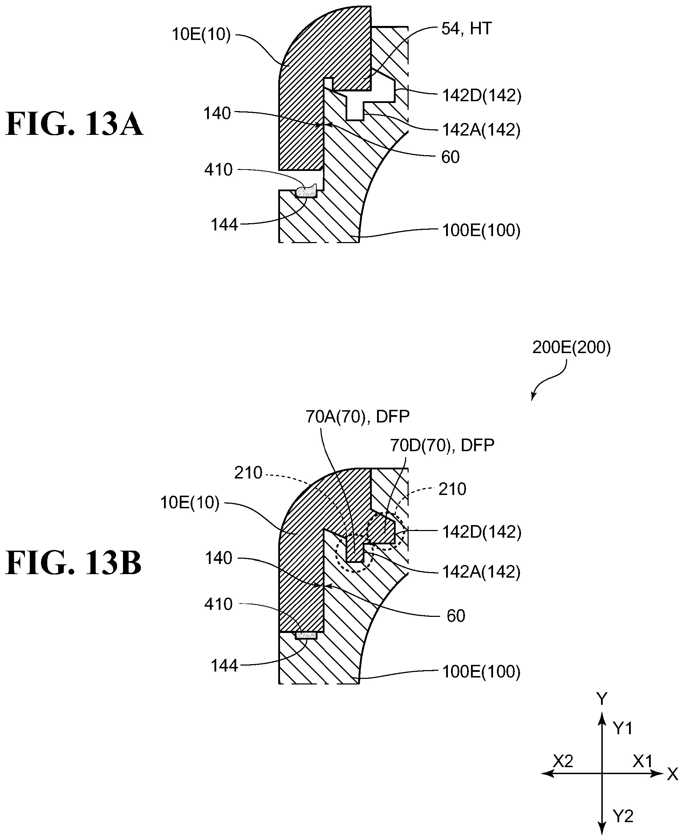

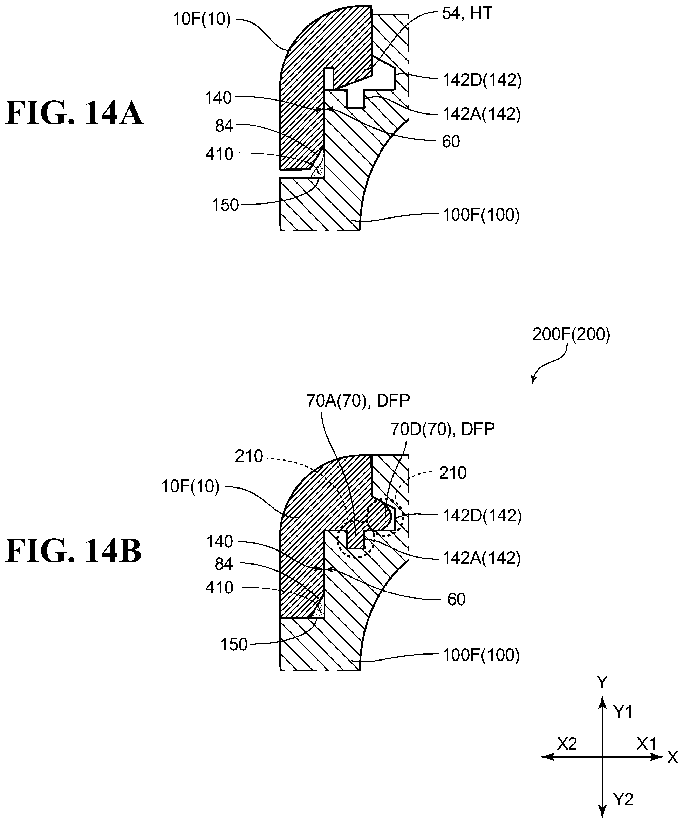

{FIG. 1} a schematic sectional view for illustrating an example of a local heating step using an infrared welding machine in one mode for carrying out a method for manufacturing a supercharger compressor housing according to an embodiment;
{FIG. 2} a schematic sectional view for illustrating a state in which an abradable seal having a heating target region being locally heated is moving toward an intake-air outlet side of a compressor housing main body portion in the one mode for carrying out the method for manufacturing the supercharger compressor housing according to the embodiment;
{FIG. 3} a schematic sectional view for illustrating an example of a mounting and fixing step in the one mode for carrying out the method for manufacturing the supercharger compressor housing according to the embodiment;
{FIG. 4} a schematic sectional view for illustrating an example of the supercharger compressor housing according to the embodiment;
{FIG. 5} a schematic sectional view for illustrating a state in which the abradable seal before being locally heated is arranged on a mounting and fixing surface of the compressor housing main body portion in another mode for carrying out the method for manufacturing the supercharger compressor housing according to a comparative example;
{FIG. 6} a schematic sectional view for illustrating a state immediately after a local heating step using an ultrasonic welding machine and the mounting and fixing step are substantially simultaneously started in a comparative example for carrying out the method for manufacturing the supercharger compressor housing ;
{FIG. 7} an enlarged sectional view for illustrating an example of a sectional structure in the vicinity of an engaging portion of the compressor housing according to the embodiment, which is illustrated in FIG. 4;
{FIGS. 8A and 8B} schematic sectional views for illustrating another example of the structure in the vicinity of the engaging portion of the compressor housing according to the embodiment, where FIG. 8A is a schematic sectional view for illustrating an example of a case in which a center axis of a groove portion is oriented in a radial direction of the compressor housing main body portion, and FIG. 8B is a schematic sectional view for illustrating an example of a case in which a center axis of a groove portion is oriented in an axial direction of the compressor housing main body portion;
{FIG. 9} a schematic sectional view for illustrating another example of the structure in the vicinity of the engaging portion of the compressor housing according to the embodiment.
{FIGS. 10A and 10B} enlarged end views for illustrating another example of the method for manufacturing a compressor housing and the compressor housing manufactured by the method according to the embodiment, where FIG. 10A is an illustration of a state immediately before the heating target region, which has been made deformable by the local heating, is deformed (immediately before welding), and
FIG. 10B is an illustration of the compressor housing manufactured through the local heating step and the mounting and fixing step;
{FIGS. 11A and 11B} enlarged end views for illustrating still another example of the method for manufacturing a compressor housing and the compressor housing manufactured by the method according to the embodiment, where FIG. 11A is an illustration of a state immediately before the heating target region, which has been made deformable by the local heating, is deformed (immediately before welding), and
FIG. 11B is an illustration of the compressor housing manufactured through the local heating step and the mounting and fixing step;
{FIGS. 12A and 12B} enlarged end views for illustrating still another example of the method for manufacturing a compressor housing and the compressor housing manufactured by the method according to the embodiment, where FIG. 12A is an illustration of a state immediately before the heating target region, which has been made deformable by the local heating, is deformed (immediately before welding), and
FIG. 12B is an illustration of the compressor housing manufactured through the local heating step and the mounting and fixing step;
{FIGS. 13A and 13B} enlarged end views for illustrating still another example of the method for manufacturing a compressor housing and the compressor housing manufactured by the method according to the embodiment, where FIG. 13A is an illustration of a state immediately before the heating target region, which has been made deformable by the local heating, is deformed (immediately before welding), and
FIG. 13B is an illustration of the compressor housing manufactured through the local heating step and the mounting and fixing step; and
{FIGS. 14A and 14B} enlarged end views for illustrating still another example of the method for manufacturing a compressor housing and the compressor housing manufactured by the method according to the embodiment, where FIG. 14A is an illustration of a state immediately before the heating target region, which has been made deformable by the local heating, is deformed (immediately before welding), and
FIG. 14B is an illustration of the compressor housing manufactured through the local heating step and the mounting and fixing step.

### {Description of Embodiments}

With a method for manufacturing a supercharger compressor housing (hereinafter sometimes simply referred to as "compressor housing") according to an embodiment, a supercharger compressor housing is manufactured at least through a local heating step of locally heating a heating target region being part of an abradable seal and a mounting and fixing step of mounting and fixing the abradable seal onto a mounting and fixing surface of a compressor main body portion. In the mounting and fixing step, the heating target region, which has been locally heated, is inserted into a groove portion formed in the mounting and fixing surface while being deformed.

In the local heating step, as a local heating apparatus to be used for local heating of the heating target region being the part of the abradable seal, an infrared welding machine is used, which selectively applies thermal energy emitted from a heat source (such as an infrared lamp) onto a portion that is desired to be locally heated to heat the portion. In a comparative example an apparatus such as an ultrasonic welding machine, which selectively focuses vibrational energy on a portion that is desired to be locally heated to generate heat in the portion, can be used. Further, the application of the thermal energy to the portion that is desired to be heated may be direct application through air conduction or radiation or indirect application through a heat transfer member such as an iron plate, which is previously heated by the heat source.

The above-mentioned local heating apparatus are all simple and inexpensive as compared to thermal spraying apparatus and injection-molding apparatus. Therefore, the method for manufacturing a supercharger compressor housing according to this embodiment enables manufacture of the compressor housing with a simpler manufacturing facility as compared to related-art methods for manufacturing a compressor housing using a thermal spraying method and an insert-molding method.

Further, in the mounting and fixing step, the heating target region being locally heated is inserted into the groove portion formed in the mounting and fixing surface while being deformed. Thus, with the method for manufacturing a supercharger compressor housing according to this embodiment, an engaging portion having a larger length in an axial direction of the groove portion can be remarkably easily formed by thermally deforming part (heating target region) of the abradable seal between the groove portion formed on the compressor housing main body portion side and the abradable seal at the time of manufacture, as compared to a related-art method for manufacturing a compressor housing using press-fitting.

For the local heating step and the mounting and fixing step, the mounting and fixing step may be carried out after the local heating step is carried out, or the local heating step and the mounting and fixing step may be substantially simultaneously carried out.

FIG. 1 to FIG. 3 are schematic views for illustrating one mode for carrying out the method for manufacturing a supercharger compressor housing according to this embodiment. More specifically, FIG. 1 to FIG. 3 are views for illustrating the manufacturing method using the infrared welding machine. FIG. 1 is a schematic sectional view for illustrating an example of the local heating step using the infrared welding machine, more specifically, is an illustration of a state in which only partial region (heating target region) of the abradable seal is locally heated by the infrared welding machine. FIG. 2 is a schematic sectional view for illustrating a state in which the abradable seal having the locally heated heating target region is being moved toward an intake air outlet side of the compressor housing main body. FIG. 3 is a schematic sectional view for illustrating an example of the mounting and fixing step, more specifically, is an illustration of a state immediately before the heating target region is deformed. FIG. 4 is a schematic sectional view for illustrating an example of a compressor housing manufactured by the method for manufacturing a supercharger compressor housing according to this embodiment.

In the drawings referred to below, an X direction and a Y direction are orthogonal to each other. The X direction is a direction parallel to a radial direction of the abradable seal, the compressor housing main body portion, and the compressor housing, whereas the Y direction is a direction parallel to an axial direction of the abradable seal, the compressor housing main body portion, and the compressor housing. A Y1 direction is an intake-air outlet side of the abradable seal, the compressor housing main body portion, and the compressor housing, whereas a Y2 direction is an intake-air inlet side of the abradable seal, the compressor housing main body portion, and the compressor housing. An X1 direction is one radial side (right side in each of the drawings) of the abradable seal and the compressor housing main body portion, whereas an X2 direction is another radial side (left side in each of the drawings) of the abradable seal and the compressor housing main body portion. For a shape and a structure in the embodiment, which are illustrated in the drawings without indication of the X direction and the Y direction, a direction is not limited to a specific direction in terms of a relationship of the X direction and the Y direction.

The reference symbol A1 denotes a center axis or the axial direction of the abradable seal. The reference symbol A2 denotes a center axis or the axial direction of the compressor housing main body portion. The reference symbol D2 denotes the radial direction of the compressor housing main body portion. The reference symbol GA denotes a center axis or an axial direction of the groove portion.

First, as illustrated in FIG. 1, in the local heating step, part of an abradable seal 10A (10) having a ring shape is locally heated by an infrared welding machine. The abradable seal 10A illustrated in FIG. 1 includes an inner peripheral surface 20 having an inner diameter that sharply increases in a direction from the Y2 direction side to the Y1 direction side, an end surface 30 being a flat surface that is parallel to the X direction and being formed at an end of the intake-air inlet side (Y2 direction side), and an outer peripheral surface 40.

Further, in the abradable seal 10A, as illustrated in FIG. 2, the outer peripheral surface 40 mainly includes a first surface 40A and a second surface 40B, which are parallel to the Y direction and have different outer diameters. The first surface 40A is a surface that is formed on the Y1 direction side with respect to the second surface 40B and is positioned on an outer side of the second surface 40B. Further, a projecting portion 50 having a distal end projecting in the Y2 direction is formed at a boundary portion between the first surface 40A and the second surface 40B. The projecting portion 50 is formed continuously in a circumferential direction.

The inner peripheral surface 20 forms part of an inner wall surface (shroud surface) of an intake passage of the compressor housing when the abradable seal 10 is mounted and fixed into the compressor housing main body portion. Further, the surfaces (the end surface 30 and the outer peripheral surface 40 in the example illustrated in FIG. 1) of the abradable seal 10 other than the inner peripheral surface 20 that forms the shroud surface, form a mounted and fixed surface 60. The mounted and fixed surface 60 faces to a mounting and fixing surface that forms part of an inner peripheral surface of the compressor housing main body portion when the abradable seal 10 is mounted and fixed into the compressor housing main body portion.

In the local heating step, an infrared welding machine 300 is used. The infrared welding machine 300 includes a casing 310 having a disc-like shape and an infrared lamp 320 having a ring shape, which is arranged inside the casing 310. An opening slit 312 having a ring shape, which is continuous in the circumferential direction, is formed in one surface of the casing 310 so as to correspond to the infrared lamp 320.

For the local heating, the infrared welding machine 300 is arranged on the intake-air inlet side (Y2 direction side) of the abradable seal 10A so that the opening slit 312 of the infrared welding machine 300 and the projecting portion 50 of the abradable seal 10A are facing to each other. Then, under this state, only the projecting portion 50 being a heating target region HT is selectively heated. Heating conditions for the selective heating are suitably selected so that a resin material that forms the projecting portion 50 of the abradable seal 10A is sufficiently softened and the projecting portion 50 becomes easily deformable in the mounting and fixing step.

After completion of the local heating step, the abradable seal 10A is mounted onto the mounting and fixing surface of the compressor housing so as to carry out the mounting and fixing step. At this time, first, as illustrated in FIG. 2, under a state in which the center axis A1 of the abradable seal 10A and the center axis A2 of a compressor housing main body portion 100A (100) are matched, and the intake-air inlet side (Y2 direction side) of the abradable seal 10A and an intake-air discharge side (Y1 side) of the compressor housing main body portion 100A face each other, the abradable seal 10A is moved closer to the compressor housing main body portion 100A.

The compressor housing main body portion 100A includes an inlet opening portion 110, which has a ring shape and is formed on the intake-air inlet side, and an outlet opening portion 120 formed on the intake-air outlet side. An inner wall surface 130 that is continuous from the inlet opening portion 110 to the vicinity of a periphery of the outlet opening portion 120 includes a first region 130A being substantially parallel to the center axis A2 and extending from the inlet opening portion 110 toward an intake-air discharge port side, a second region 130B being substantially flush with an opening surface of the outlet opening portion 120 and surrounding a periphery of the outlet opening portion 120, and a third region 130C being a boundary portion between the first region 130A and the second region 130B and being positioned in the vicinity of the outlet opening portion 120. In the compressor housing main body portion 100A exemplified in FIG. 3, the third region 130C that is part of the inner wall surface 130 forms a mounting and fixing surface 140.

The mounting and fixing surface 140 includes a first surface 140A extending radially outward from a boundary portion between the first region 130A and the third region 130C, a second surface 140B extending from an outer peripheral end side of the first surface 140A to the Y1 direction side, a third surface 140C extending radially outward from an end of the second surface 140B on the Y1 direction side, a fourth surface 140D extending from a boundary portion between the second region 130B and the third region 130C in the Y2 direction, and a groove portion 142 being formed at a boundary portion between the third surface 140C and the fourth surface 140D and having a groove bottom projecting toward a radially outer side. The groove portion 142 is formed continuously in the circumferential direction.

In the mounting and fixing step, first, as illustrated in FIG. 3, the abradable seal 10A is inserted into an inner peripheral portion of the compressor housing main body portion 100A until at least part of the mounted and fixed surface 60 of the abradable seal 10A and at least part of the mounting and fixing surface 140 of the compressor housing main body portion 100A are brought into contact with each other. At this time, the projecting portion 50 (heating target region HT) that projects from a main body portion of the abradable seal 10A, which has been made easily deformable by the local heating, maintains a shape before the heating. A shape of the mounted and fixed surface 60 of the abradable seal 10A and a shape of the mounting and fixing surface 140 of the compressor housing main body portion 100A do not perfectly correspond to each other (only partially correspond to each other). Therefore, partial gaps G are formed between the mounted and fixed surface 60 and the mounting and fixing surface 140.

In the example illustrated in FIG. 3, the shape of the projecting portion 50 (heating target region HT), which is a part of the mounted and fixed surface 60 of the abradable seal 10A, and a shape of the vicinity of the groove portion 142 of the compressor housing main body portion 100A do not have such a relationship that the projecting portion 50 and the vicinity of the groove portion 142 can be engaged with each other substantially without a gap. A shape of a remainder part of the mounted and fixed surface 60 and a shape of a remainder part of the mounting and fixing surface 140 have a relationship of corresponding to each other.

Next, the abradable seal 10A under the state illustrated in FIG. 3 is further inserted toward the compressor housing main body portion 100A side while a pressure is being applied thereto. At this time, the projecting portion 50 (heating target region HT) of the abradable seal 10A, which has been made easily deformable by the local heating, is pressed hard against the third surface 140C of the mounting and fixing surface 140 to be deformed so as to expand to both radial sides. As a result, the gaps G formed between the mounted and fixed surface 60 and the mounting and fixing surface 140 are eliminated. At the same time, part of the deformed projecting portion 50 (heating target region HT) penetrates into the groove portion 142 to form an engaging portion 210 engaged with the groove portion 142. Then, under this state, the heating target region HT, which has been completely deformed, is cooled and solidified. As a result, as illustrated in FIG. 4, a compressor housing 200A (200) including the compressor housing main body portion 100A and the abradable seal 10A that is mounted and fixed into the compressor housing maim body portion 100A can be obtained. Through press-fitting of the abradable seal 10A toward the compressor housing main body portion 100A side, an effect of preventing a positional deviation of the abradable seal 10A in the X direction can be obtained when the abradable seal 10A is mounted into the compressor housing main body portion 100A.

The mounting and fixing step may be carried out under a reduced-pressure environment. Further, in order to improve productivity, forcible cooling may be carried out with a blow of an air at an ambient temperature or a cooled air, or other methods substantially simultaneously with the end of deformation of the heating target region HT.

The inner peripheral surface 20 of the abradable seal 10A that is mounted and fixed into the compressor housing main body portion 100 forms an inner wall surface 220 of the compressor housing 200 together with the first region 130A and the second region 130B, which form the inner wall surface 130 of the compressor housing main body portion 100. When a supercharger is assembled using the compressor housing 200, distal ends of blades of a compressor impellor are positioned in proximity to the inner wall surface 20 of the abradable seal 10.

FIG. 5 and FIG. 6 are schematic views for illustrating a comparative example for carrying out the method for manufacturing a supercharger compressor housing, and more specifically, are views for illustrating the manufacturing method using an ultrasonic welding machine. FIG. 5 is a schematic sectional view for illustrating a state in which the abradable seal before being locally heated is arranged on the mounting and fixing surface of the compressor housing main body portion, and FIG. 6 is a schematic sectional view for illustrating a state immediately after the local heating step using the ultrasonic welding machine and the mounting and fixing step are started substantially simultaneously. In the example illustrated in FIG. 5 and FIG. 6, the compressor housing main body portion 100A and the abradable seal 10A, which are similar to those illustrated in FIG. 1 and FIG. 2, are used except for a difference in the local heating method.

First, as illustrated in FIG. 5, the abradable seal 10A before being locally heated is arranged on the mounting and fixing surface 140 of the compressor housing main body portion 100A. This arrangement state is completely the same as the arrangement state illustrated in FIG. 3 except that the projecting portion 50 (heating target region HT) of the abradable seal 10A has not been made easily deformable by the local heating. Next, a vibratory horn 330 that forms part of the ultrasonic welding machine is moved closer to the abradable seal 10A from the outlet opening portion 120 side of the compressor housing main body portion 100A so that the vicinity of an end of the inner peripheral surface 20 of the abradable seal 10A on the Y1 direction side and a bottom surface 332 of the vibratory horn 330 are brought into close contact with each other as illustrated in FIG. 6. The ultrasonic welding machine includes the vibratory horn 330 and an ultrasonic oscillator (not shown) connected thereto.

Then, under the state illustrated in FIG. 6, an ultrasonic wave is applied to the abradable seal 10A through the vibratory horn 330. In this case, vibrational energy is focused on the projecting portion 50 (heating target region HT) of the abradable seal 10A, which is an outwardly pointed portion. Therefore, only a temperature of the projecting portion 50 rapidly rises to locally heat the projecting portion 50. At the same time, the projecting portion 50 becomes easily deformable. Conditions of application of the ultrasonic wave at this time are suitably selected so that the mounting and fixation are facilitated.

Next, the abradable seal 10A with the projecting portion 50 (heating target region HT) being easily deformable is further inserted toward the compressor housing main body portion 10A side while the pressure is being applied thereto. At this time, the projecting portion 50 (heating target region HT) of the abradable seal 10A, which has been made easily deformable by the local heating through the application of the ultrasonic wave, is pressed hard against the third surface 140C of the mounting and fixing surface 140 to be deformed so as to expand to both radial sides. As a result, the gaps G formed between the mounted and fixed surface 60 and the mounting and fixing surface 140 are eliminated. At the same time, part of the deformed projecting portion 50 (heating target region HT) penetrates into the groove portion 142 to form the engaging portion 210 at which the projecting portion 50 is engaged with the groove portion 142. In this manner, the compressor housing 200A illustrated in FIG. 4 can be obtained.

In the method for manufacturing a compressor housing according to this example, which involves use of the ultrasonic welding machine, the local heating step and the mounting and fixing step are carried out substantially simultaneously. The local heating step and the mounting and fixing step may be carried out under a reduced-pressure environment. Further, in order to improve productivity, the forcible cooling may be carried out with a blow of an air at an ambient temperature or a cooled air, or other methods substantially simultaneously with the end of deformation of the heating target region HT.

The heating target region HT can be suitably selected in accordance with a combination of the shape of the mounted and fixed surface 60 of the abradable seal 10 and the shape of the mounting and fixing surface 140 of the compressor housing main body portion 100 as long as the heating target region HT is a portion including a region of the mounted and fixed surface 60 of the abradable seal 10. Therefore, the heating target region HT is not limited to the projecting portion having the distal end with a sharply and narrowly pointed shape on the XY cross section as exemplified in FIG. 1 to FIG. 3, FIG. 5, and FIG. 6, or a projecting portion including a distal end having a flat surface with a narrow width, or other projecting portions. For example, an angular portion having a distal end with an angle of about 90 degrees on the XY cross section, an elevated portion having a peak with a flat surface having a large width, which has a smaller degree of projection to an outer side of the abradable seal 10 as compared to a degree of projection of the projecting portion, a portion selected from a region having a continuous flat surface with a larger width than the width of the elevated portion, or other portions can also be suitably selected.

When the local heating is carried out through conversion of the vibrational energy into thermal energy as in the case of the ultrasonic welding machine or other machines, it is preferred that the heating target region HT formed on the mounted and fixed surface 60 of the abradable seal 10 be selected from the projecting portion and the angular portion. It is more preferred that the projecting portion be selected, and is further preferred that the projecting portion including the distal end having a sharply pointed shape be selected. This is because the vibrational energy can be more easily selectively focused on the vicinity of the heating target region HT when the heating target region HT has the narrowly pointed shape.

The heating target region HT may be a continuous region or a non-continuous (discrete) region in the circumferential direction. The continuous region or the discrete region in the circumferential direction can be suitably selected as the heating target region HT in accordance with a kind of a local heating apparatus to be used and a circumferential position of forming of the groove portion 142 formed in the compressor housing main body portion 100. In terms of the local heating apparatus to be used, (1) when the infrared welding machine is used, the heating target region HT can be selected based on a shape and a structure of the infrared welding machine, and (2) when the ultrasonic welding machine is used, the heating target region HT can be selected based on a shape and a structure of the abradable seal 10. For example, when the infrared welding machine 300 illustrated in FIG. 1 is used, a shield plate is provided to part of the opening slit 312 that is continuous in the circumferential direction to make the region to be irradiated with the infrared ray discrete in the circumferential direction. As a result, the heating target region HT that is discrete in the circumferential direction is obtained. Further, when the ultrasonic fusing machine including the vibratory horn 330 exemplified in FIG. 5 and FIG. 6 is used, a shape and a structure of a portion (projecting portion 50 in the example illustrated in FIG. 5 and FIG. 6) of the entire abradable seal 10, where the vibrational energy is focused on the portion, are made discrete in the circumferential direction. As a result, the heating target region HT that is discrete in the circumferential direction is obtained.

As described above, with the method for manufacturing a compressor housing according to this embodiment, the compressor housing 200A as exemplified in FIG. 4 and FIG. 7 can be obtained. FIG. 7 is an enlarged sectional view for illustrating an example of a sectional structure of the vicinity of the engaging portion 210 of the compressor housing 200A illustrated in FIG. 4. The compressor housing 200 according to this embodiment includes at least the abradable seal 10 having the ring shape and the compressor housing main body portion 100 having the ring shape and the mounting and fixing surface 140 being formed at part of the inner wall surface 130, the mounting and fixing surface 140 being mounted and fixed with abradable seal 10. The mounting and fixing surface 140 is provided with the groove portion 142. Inside the groove portion 142, a projecting portion 70 forming part of the abradable seal 10 is arranged.

The projecting portion 70 is also a thermally deformed projecting portion DFP that forms a thermally deformed portion DF formed by thermal deformation of the heating target region HT. In the manufacture example illustrated in FIG. 1 to FIG. 3, FIG. 5, and FIG. 6, the projecting portion 70 is the thermally deformed projecting portion DFP that is formed by penetration of only part of the thermally deformed portion DF formed by deformation of the heating target region HT (projecting portion 50) that has been made deformable by the local heating. This is because, in the manufacture example illustrated in FIG. 1 to FIG. 3, FIG. 5, and FIG. 6, the heating target region HT (projecting portion 50) is deformed while expanding to both radial sides at the time of deformation. Therefore, the thermally deformed portion DF, which is a region defined by the dotted line in FIG. 7, expands not only into the groove portion 142 but also in the X2 direction with respect to the groove portion 142. Although the thermally deformed projecting portion DFP is only required to be a portion corresponding to at least part of the entire thermally deformed portion DF as in the case of the projecting portion 70 illustrated in FIG. 7, the thermally deformed projecting portion DFP may be a portion that substantially matches the entire thermally deformed portion DF.

The thermally deformed portion DF of the abradable seal 10 in a state of being mounted and fixed to the compressor housing main body portion 100 is a portion formed by plastic fluidization and subsequent cooling and solidification of the resin material that forms the abradable seal 10 at the time of mounting and fixation. Therefore, there is formed a portion in which a surface of the thermally deformed portion DF and the mounting and fixing surface 140 are held in close contact with each other without a gap. The reason is as follows. In a process in which the heating target region HT is thermally deformed and then cooled and solidified again, a surface roughness shape of the mounting and fixing surface 140 is thermally transferred onto the surface of the thermally deformed portion DF. Meanwhile, in an interface region INT2a formed between a portion of the mounted and fixed surface 60 of the abradable seal 10 except for the surface of the thermally deformed portion DF and the mounting and fixing surface 140, the above-mentioned transfer of the surface roughness shape does not occur. Therefore, in the interface region INT2a, the surface roughness shape of the mounting and fixing surface 140 and a surface roughness shape of the mounted and fixed surface 60 do not correspond to each other.

Specifically, in the compressor housing 200 according to this embodiment, in an entire interface formed by the mounting and fixing surface 140 and a part of the surface of the abradable seal 10 facing to the mounting and fixing surface 140, a first interface region INT1 is formed by a first region of an inner wall surface of the groove portion 142, where the first region closely contacts with a surface of the projecting portion 70, and a second region of the surface of the projecting portion 70, where the second region closely contacts with the inner surface. In the first interface region INT1, the surface roughness shape of the mounting and fixing surface 140 and the surface roughness shape of the mounted and fixed surface 60 have a relationship of corresponding to each other. More specifically, the relationship in which the surface roughness shapes correspond to each other is a relationship in which surface recesses and projections of one of the surfaces correspond to surface recesses and projections of another surface without a gap by being thermally transferred onto the another surface.

In contrast, a second interface region INT2 obtained by excluding the first interface region INT1 from the entire interface includes a portion (interface region INT2a) in which the surface roughness shape of the mounting and fixing surface 140 does not correspond to the surface roughness shape of the mounted and fixed surface 60.

As described above, in the engaging portion 210 of the compressor housing 200 according to this embodiment, the interface at which the surface of the projecting portion 70 and the inner wall surface of the groove portion 142 are held in close contact with each other is formed. The same substantially similarly applies to a case in which an engaging portion is formed by insert molding. Therefore, as compared to a case in which the projecting portion and the groove portion are simply mechanically engaged with each other, a remarkably large bonding strength can be obtained at the engaging portion 210.

Meanwhile, in a case in which the engaging portion is formed by causing a bulging portion formed on an outer peripheral portion of the abradable seal to bulge into the groove portion by a press-fitting method exemplified in Patent Literature 3, a larger bonding strength can be easily obtained as compared to a case in which the engaging portion formed by causing the bulging portion to bulge is not formed. At the time of press-fitting, however, a pressure is applied to the abradable seal or the vicinity of the bulging portion to generate a residual stress. As a result, creeping inevitably occurs. With the method for manufacturing a compressor housing according to this embodiment, however, the engaging portion 210 is formed by the thermal deformation. Therefore, in comparison to the related-art manufacturing method using the press-fitting, the residual stress is scarcely generated in the main body portion and the projecting portion 70 of the abradable seal 10 at the time of manufacture and after the manufacture of the compressor housing 200 according to this embodiment. Thus, the occurrence of creeping can be prevented.

For reference, with the press-fitting method exemplified in Patent Literature 3, a surface of the bulging portion and the mounting and fixing surface are firmly held in close contact with each other at an interface therebetween. However, the interface portion is simply formed only by mechanical press-fitting. Therefore, as compared to a case in which the resin material that forms the heating target region HT is softened by heating and is firmly brought into close contact with the inner wall surface of the groove portion 142, there is a tendency that an extremely small gap is formed at the interface or fine wrinkles, cracks, and other defects due to a mechanical strain in the vicinity of the surface of the bulging portion is formed by the pressure applied at the time of press-fitting. Further, with the thermal spraying method or the insert-molding method, the mounting and fixing surface and the mounted and fixed surface are held in close contact with each other over the entire interface. Specifically, the above-mentioned interface structure is peculiar to the compressor housing 200 according to this embodiment, and is not found in the related-art compressor housings. Further, in the compressor housing 200 according to this embodiment, the abradable seal 10 includes the thermally deformed portion DF formed by the thermal deformation at the time of manufacture and the portion (non-thermally deformed portion) other than the thermally deformed portion DF. Such a structure is also peculiar, and is not found in the related-art compressor housings manufactured by the thermal spraying method, the insert-molding method, or the press-fitting method.

Next, other variations of the structure of the vicinity of the engaging portion 210 are described. FIGS. 8A, 8B and 9 are schematic sectional views, each for illustrating another example of the structure of the vicinity of the engaging portion. FIG. 8A is a schematic sectional view for illustrating an example of a case in which the center axis of the groove portion is oriented in the radial direction of the compressor housing main body portion, and FIG. 8B is a schematic sectional view for illustrating an example of a case in which the center axis of the groove portion is oriented in the axial direction of the compressor housing main body portion. FIG. 9 is a schematic sectional view for illustrating an example of a case in which the distal end of the projecting portion is separated from the bottom of the groove portion.

A groove portion 142D (142) illustrated in FIG. 8A is a groove portion (hereinafter sometimes referred to as "radial groove portion") having the center axis GA with an angle α equal to or larger than -45 degrees and equal to or smaller than 60 degrees with respect to the radial direction D2 of the compressor housing main body portion 100 (not shown in FIGS. 8A and 8B). For a sign of a value of the angle α, when the angle α illustrated in FIG. 8A is formed on the Y2 direction side with respect to the radial direction D2, the sign is positive. In the opposite case, the sign is negative.

The engaging portion 210 formed by the radial groove portion 142D and the projecting portion 70 (thermally deformed projecting portion DFP) arranged in the radial groove portion 142D can effectively prevent drop or detachment of the abradable seal 10 caused by slide of the abradable seal 10 in the Y1 direction. For the manufacture of the compressor housing 200, in terms of further facilitation of deep insertion of the heating target region HT, which has become easily deformable by heating, into the radial groove portion 142D without a gap while deforming the heating target region HT, a lower limit value of the angle α is preferably equal to or larger than 0 degrees, more preferably, equal to or larger than 10 degrees. In terms of further reliable prevention of the drop or the detachment of the abradable seal 10, an upper limit value of the angle α is preferably equal to or smaller than 40 degrees, more preferably, equal to or smaller than 30 degrees.

A groove portion 142A (142) illustrated in FIG. 8B is a groove portion (hereinafter sometimes referred to as "axial groove portion") having the center axis GA with an angle β larger than -30 degrees and smaller than 30 degrees with respect to the axial direction A2 of the compressor housing main body portion 100 (not shown in FIGS. 8A and 8B). In FIG. 8B, the axial direction A2 (not shown) is on the left side in the X direction. A line A2a parallel to the axial direction A2 is shown instead. For a sign of a value of the angle β, when the angle β is formed on a side on which the axial groove portion 142A is positioned with respect to the axial direction A2 (line A2a) as shown in FIG. 8B, the sign of the angle β is positive. In the opposite case, the sign is negative.

The engaging portion 210 formed by the axial groove portion 142A and the projecting portion 70 (thermally deformed projecting portion DFP) arranged in the axial groove portion 142A can effectively prevent a positional deviation of the abradable seal 10 caused by slide of the abradable seal 10 in the X direction. For the manufacture of the compressor housing 200, in terms of further facilitation of deep insertion of the heating target region HT, which has become easily deformable by heating, into the axial groove portion 142A without a gap while deforming the heating target region HT, the angle β preferably falls within a range of from -10 degrees to 10 degrees, more preferably, is 0 degrees.

The surface of the projecting portion 70 may be held in close contact with the entire inner wall surface of the groove portion 142, as exemplified in FIGS. 8A, 8B and other drawings. As exemplified in FIG. 9, however, a distal end 70T of the projecting portion 70 may be separated from a bottom 142BT of the groove portion 142. When the distal end 70T of the projecting portion 70 is separated from the bottom 142BT of the groove portion 142, a surface of the distal end 70T generally has a surface texture different from that of a portion of the surface (mounted and fixed surface 60) of the abradable seal 10 facing the mounting and fixing surface 140 excluding the surface of the distal end 70T. The difference in surface texture is the difference in at least any one of elements selected from (1) numerical values of various roughness parameters including Ra, (2) regularity/irregularity of the surface recesses and projections, and (3) isotropy/anisotropy of the surface recesses and projections.

The reason is as follows. First, the abradable seal 10 is generally formed by injection molding. Therefore, the surface of the abradable seal 10 is a smooth surface obtained by transfer of an inner wall surface (generally, a smooth surface) of a die used at the time of injection molding. Meanwhile, when the surface of the abradable seal 10 made of the resin material is simply heated, roughness of the surface of the heated portion increases to such a degree that the roughness is easily visible as compared to roughness before heating. Thus, the smooth surface turns into a rough surface (rough surface having irregularly formed fine surface recesses and projections). For the manufacture of the compressor housing 200, however, the heating target region HT is deformed while being pressed against the mounting and fixing surface 140 generally being the smooth surface. Therefore, a portion of the surface of the thermally deformed portion DF, where the portion is held in close contact with the mounting and fixing surface 140, becomes a smooth surface obtained by the transfer of the mounting and fixing surface 140. However, when there is formed a portion in which the projecting portion 70 that forms the thermally deformed portion DF and the inner wall surface of the groove portion 142, which includes the mounting and fixing surface 140, cannot be held in close contact with each other and are separated from each other as illustrated in FIG. 9, the surface of the thermally deformed portion DF (specifically, the surface of the distal end 70T of the projecting portion 70), which is not held in close contact with the mounting and fixing surface 140, remains as the rough surface (rough surface having irregularly formed fine surface recesses and projections).

A depth D of the groove portion 142 is not particularly limited. However, in terms of facilitation of the forming of the engaging portion 210 having a large bonding force, the depth D is preferably equal to or larger than 0.3 mm, more preferably, equal to or larger than 0.5 mm, and further preferably, equal to or larger than 1.0 mm. Meanwhile, although an upper limit of the depth D is not particularly limited. Thus, although the upper limit of the depth D may be equal to or smaller than 5.0 mm in terms of processability, the upper limit of the depth D is preferably equal to or smaller than 2.0 mm in practical use because a deep groove is required to be processed. In this case, it is preferred that a length L (length in a direction parallel to the center axis GA) of the projecting portion 70 arranged in the groove portion 142 fall within a range of from 0.5×D to D. When a relationship of length L<depth D is satisfied, the distal end 70T of the projecting portion 70 is separated from the bottom 142BT of the groove portion 142, as exemplified in FIG. 9. When a relationship of length L=depth D is satisfied, the surface of the projecting portion 70 is held in close contact with the entire inner wall surface of the groove portion 142, as exemplified in FIGS. 8A, 8B and other drawings.

Further, with the method for manufacturing a compressor housing according to this embodiment, the projecting portion 70 is formed by thermally deforming the heating target region HT. Therefore, as compared to the case in which the bulging portion is formed by the press-fitting method as exemplified in Patent Literature 3, the length L of the projecting portion 70 can be easily increased to be significantly larger than a bulging length (bulging amount) of the bulging portion. In terms of facilitation of the forming of the engaging portion 210 having a large bonding force, the length L of the projecting portion 70 has a practically impossible value for the bulging amount when the bulging portion is formed by the press-fitting method as exemplified in Patent Literature 3, specifically, is preferably equal to or larger than 0.15 mm, more preferably, equal to or larger than 0.25 mm. An upper limit value of the length L is only required to be equal to or smaller than the depth D.

Next, another example of the method for manufacturing a compressor housing and the compressor housing manufactured by the method according to this embodiment are further described. FIGS. 10A, 10B to FIGS. 14A, 14B are enlarged end views for illustrating other examples of the method for manufacturing a compressor housing and the compressor housing manufactured by the method according to this embodiment. FIGS. 10A, 10B to FIGS. 14A, 14B are enlarged end views, each for illustrating a structure in the vicinity of the interface between the mounted and fixed surface 60 of the abradable seal 10 and the mounting and fixing surface 140 of the compressor housing main body portion 100. FIG. 10A, FIG. 11A, FIG. 12A, FIG. 13A, and FIG. 14A, each being on the upper side of the pair of drawings, are views for illustrating a state immediately before the heating target region HT, which has been made deformable by the local heating, is deformed (immediately before the welding), and are illustrations of a stage equivalent to the state illustrated in FIG. 3 or FIG. 6 in terms of the process. FIG. 10B, FIG. 11B, FIG. 12B, FIG. 13B, and FIG. 14B, each being on the lower side of the pair of drawings, are views for illustrating the compressor housing 200 manufactured through the local heating step and the mounting and fixing step.

In an abradable seal 10B (10) to be used for the manufacture of a compressor housing 200B (200) illustrated in FIGS. 10A and 10B, two projecting portions 50 (heating target regions HT) are formed on the mounted and fixed surface 60. One (projecting portion 50 on the outlet side) of the projecting portions 50 is formed on the Y1 direction side, whereas another one (projecting portion 50 on the inlet side) is formed on the Y2 direction side.

Meanwhile, in a compressor housing main body portion 100B (100) to be used for the manufacture of the compressor housing 200B, a total of three groove portions 142 including two radial groove portions 142D (142) and one axial groove portion 142A (142) is formed in the mounting and fixing surface 140. One radial groove portion 142D (radial groove portion 142D on the outlet side) of the two radial groove portions 142 is formed on the Y1 direction side, whereas another radial groove portion 142D (radial groove portion 142D on the inlet side) is formed on the Y2 direction side. The axial groove portion 142A is formed at a position in proximity to the radial groove portion 142D on the outlet side.

Under a state immediately before the welding, the projecting portion 50 on the outlet side is positioned so as to face to the radial groove portion 142D on the outlet side and the axial groove portion 142A, whereas the projecting portion 50 on the inlet side is positioned so as to face to the projecting portion 50 on the inlet side, as illustrated in FIG. 10A. For the manufacture of the compressor housing 200B, the two projecting portions 50, each being the heating target region HT, are inserted into the groove portions 142 while being thermally deformed. At this time, the projecting portion 50 on the outlet side is thermally deformed to penetrate into the radial groove portion 142D on the outlet side and the axial groove portion 142A. At the same time, the projecting portion 50 on the inlet side is thermally deformed to penetrate into the radial groove portion 142D on the inlet side. In this manner, the projecting portions 70 (thermally deformed projecting portions DFP), which are newly formed by the thermal deformation, are arranged in the respective groove portions 142. As a result, the compressor housing 200B including the three engaging portions 210 is obtained.

The projecting portion 70 arranged in the radial groove portion 142D is sometimes referred to as "radial projecting portion 70D", and the projecting portion 70 arranged in the axial groove portion 142A is sometimes referred to as "axial projecting portion 70A". When the number of the heating target regions HT, the number of groove portions 142, the number of projecting portions 70 (thermally deformed projecting portions DFP), and the number of engaging portions 210 are counted, a region or a portion which is present at each different position on a plane that is parallel to both the axial direction A2 and the radial direction D2 of the compressor housing main body portion 100 and a plane (XY plane) that is parallel to both the axial direction A1 and the radial direction of the abradable seal 10 is counted as one region or portion. Therefore, regardless of whether the heating target region HT, the groove portion 142, the projecting portion 70 (thermally deformed projecting portion DFP), or the engaging portion 210, which is present at one position, is formed continuously or non-continuously (discretely) in the circumferential direction on the XY plane, the above-mentioned region or portion is counted as one region or portion.

In an abradable seal 10C (10) to be used for the manufacture of a compressor housing 200C (200) illustrated in FIGS. 11A and 11B, one projecting portion 50 (heating target region HT) is formed on the mounted and fixed surface 60.

Meanwhile, in a compressor housing main body portion 100C (100) to be used for the manufacture of the compressor housing 200C, a total of two groove portions 142 including one radial groove portion 142D (142) and one axial groove portion 142A (142) is formed in the mounting and fixing surface 140. The axial groove portion 142A is formed at a position in proximity to the radial groove portion 142D. On the Y2 direction side of those two groove portions 142, an auxiliary groove portion 144 is further formed.

Under the state immediately before the welding, as illustrated in FIG. 11(A), the projecting portion 50 is positioned so as to face to the radial groove portion 142D and the axial groove portion 142A. Further, inside the auxiliary groove portion 144, an O-ring 400 is arranged. For the manufacture of the compressor housing 200B, the projecting portion 50 being the heating target region HT is inserted into the groove portions 142 while being thermally deformed. At this time, the projecting portion 50 is thermally deformed to penetrate into the radial groove portion 142D and the axial groove portion 142A. At the same time, the O-ring 400 is sandwiched between the auxiliary groove portion 144 formed in the mounting and fixing surface 140 and the mounted and fixed surface 60 facing to the auxiliary groove portion 144. In this manner, the projecting portions 70 (thermally deformed projecting portions DFP), which are newly formed by the thermal deformation, are arranged in the respective groove portions 142. As a result, the compressor housing 200C including the two engaging portions 210 is obtained. The groove portions 142 are groove portions (groove portions for thermal engagement), which have fundamentally different functions and roles from those of the auxiliary groove portion 144 in that each of the groove portions 142 has a function of forming the engaging portion 210 by arranging the thermally deformed projecting portion DFP therein.

In an abradable seal 10D (10) to be used for manufacture of a compressor housing 200D (200) illustrated in FIGS. 12A and 12B, a single angular portion 52 (heating target region HT) is formed on the mounted and fixed surface 60. A groove portion 80 is formed on the Y2 direction side of the angular portion 52. Further, an auxiliary projecting portion 82 is formed on the Y2 direction side of the groove portion 80.

Meanwhile, in a compressor housing main body portion 100D (100) to be used for the manufacture of the compressor housing 200D, one radial groove portion 142D (142) is formed in the mounting and fixing surface 140. Further, the auxiliary groove portion 144 is formed on the Y2 direction side of the radial groove portion 142D.

Under the state immediately before the welding, the angular portion 52 is positioned so as to face to the radial groove portion 142D, as illustrated in FIG. 12(A). The O-ring 400 is arranged in the groove portion 80. Further, the auxiliary projecting portion 82 is positioned so as to face to the auxiliary groove portion 144. The angular portion 52 being the heating target region HT and the radial groove portion 142D cannot be engaged with each other through direct engagement without using the thermal deformation and do not have corresponding shapes. In contrast, the auxiliary projecting portion 82 and the auxiliary groove portion 144 have corresponding shapes, which allow the direct engagement therebetween without using the thermal deformation.

For the manufacture of the compressor housing 200D, the angular portion 52 being the heating target region HT is inserted into the radial groove portion 142D while being thermally deformed. At this time, the angular portion 52 is thermally deformed to penetrate into the radial groove portion 142D. At the same time, the O-ring 400 is sandwiched between the groove portion 80 formed in the mounted and fixed surface 60 and the mounting and fixing surface 140 facing to the groove portion 80, while the auxiliary projecting portion 82 is arranged in the auxiliary groove portion 144 to be engaged therewith.

In this manner, the projecting portion 70 (thermally deformed projecting portion DFP), which is newly formed by the thermal deformation, is arranged in the radial groove portion 142D. As a result, the compressor housing 200D including the single engaging portion 210 is obtained. The compressor housing 200D further includes an auxiliary engaging portion (auxiliary engaging portion 212) including the auxiliary projecting portion 82 formed by the simple insertion without using the thermal deformation and the auxiliary groove portion 144.

In an abradable seal 10E (10) to be used for manufacture of a compressor housing 200E (200) illustrated in FIGS. 13A and 13B, a single elevated portion 54 (heating target region HT) is formed on the mounted and fixed surface 60.

Meanwhile, in a compressor housing main body portion 100E (100) to be used for the manufacture of the compressor housing 200E, a total of two groove portions 142 including one radial groove portion 142D (142) and one axial groove portion 142A (142) is formed in the mounting and fixing surface 140. The axial groove portion 142A is formed at a position in proximity to the radial groove portion 142D. On the Y2 direction side of those two groove portions 142, the auxiliary groove portion 144 is further formed.

Under the state immediately before the welding, as illustrated in FIG. 13(A), the elevated portion 54 is positioned so as to face to the radial groove portion 142D and the axial groove portion 142A. Further, inside the auxiliary groove portion 144, a sealing material (sealant) 410 is arranged. For the manufacture of the compressor housing 200E, the elevated portion 54 being the heating target region HT is inserted into the groove portions 142 while being thermally deformed. At this time, the elevated portion 54 is thermally deformed to penetrate into the radial groove portion 142D and the axial groove portion 142A. At the same time, the sealing material (sealant) 410 is sandwiched between the auxiliary groove portion 144 formed in the mounting and fixing surface 140 and the mounted and fixed surface 60 facing to the auxiliary groove portion 144. In this manner, the projecting portions 70 (thermally deformed projecting portions DFP), which are newly formed by the thermal deformation, are arranged in the respective groove portions 142. As a result, the compressor housing 200E including the two engaging portions 210 is obtained.

In an abradable seal 10F (10) to be used for manufacture of a compressor housing 200F (200) illustrated in FIGS. 14A and 14B, one elevated portion 54 (heating target region HT) is formed on the mounted and fixed surface 60. A tapered portion 84 having a shape obtained by chamfering an angular portion is formed on the Y2 direction side of the elevated portion 54.

Meanwhile, in a compressor housing main body portion 100F (100) to be used for the manufacture of the compressor housing 200F, a total of two groove portions 142 including one radial groove portion 142D (142) and one axial groove portion 142A (142) is formed in the mounting and fixing surface 140. The axial groove portion 142A is formed at a position in proximity to the radial groove portion 142D. On the Y2 direction side of those two groove portions 142, a corner portion 150 is further formed.

Under the state immediately before the welding, the elevated portion 54 is positioned so as to face to the radial groove portion 142D and the axial groove portion 142A, whereas the tapered portion 84 is positioned so as to face to the corner portion 150, as illustrated in FIG. 14(A). The sealing material (sealant) 410 is arranged at the corner portion 150. For manufacture of the compressor housing 200F, the elevated portion 54 being the heating target region HT is inserted into the groove portions 142 while being thermally deformed. At this time, the elevated portion 54 is thermally deformed to penetrate into the radial groove portion 142D and the axial groove portion 142A. At the same time, the sealing material (sealant) 410 is sandwiched between the corner portion 150 of the mounting and fixing surface 140 and the tapered portion 84 facing to the corner portion 150. In this manner, the projecting portions 70 (thermally deformed projecting portions DFP), which are newly formed by the thermal deformation, are arranged in the respective groove portions 142. As a result, the compressor housing 200F including the two engaging portions 210 is obtained.

Although the compressor housing main body portion 100 to be used for the method for manufacturing a compressor housing according to this embodiment is only required to include one or more groove portion 142 formed in the mounting and fixing surface 140, it is particularly preferred that the radial groove portion 142D be included as the groove portion 142. In this case, in the mounting and fixing step, the locally heated heating target region HT is inserted into the radial groove portion 142D while being deformed. In this manner, the engaging portion 210 including the radial projecting portion 70D arranged in the radial groove portion 142D can be formed.

In the compressor housing 200 including the engaging portion 210 with the center axis GA of the groove portion 142 described above being oriented in the radial direction D2 of the compressor housing main body portion 100, the drop or the detachment of the abradable seal 10 mounted and fixed into the compressor housing main body portion 100 can be prevented. Therefore, a fixing member such as a C-ring, a pin, or a screw is not required to be used for the purpose of prevention of the drop or the detachment of the abradable seal 10. Further, in comparison to a case in which the engaging portion with the center axis of the groove portion being oriented in the radial direction is formed by the press-fitting method exemplified in Patent Literature 3 and other literatures, the engaging portion 210 formed by arranging the radial projecting portion 70D in the radial groove portion 142D allows easy forming of the radial projecting portion 70D having the larger length L in the axial direction GA of the radial groove portion 142D. Thus, an anchor effect produced at the engaging portion 210 can be increased. As a result, an extremely excellent effect of preventing the drop and the detachment of the abradable seal 10 can be obtained.

In order to further improve the effect of preventing the drop and the detachment of the abradable seal 10, two or more radial groove portions 142D may be formed in the mounting and fixing surface 140, as exemplified in FIGS. 10A and 10B.

The axial groove portion 142A may be included as the groove portion 142. In this case, in the mounting and fixing step, the engaging portion 210 including the axial projecting portion 70A arranged in the axial groove portion 142A can be formed by inserting the locally heated heating target region HT into the axial groove portion 142A while deforming the heating target region HT. In the compressor housing 200 including the engaging portion 210 with the center axis GA of the groove portion 142 being oriented in the axial direction as described above, a positional deviation of the abradable seal 10 mounted and fixed into the compressor housing main body portion 100 in the radial direction can be suppressed.

It is further preferred that the radial groove portion 142D and the axial groove portion 142A formed at a position in proximity to the radial groove portion 142D be included as the groove portions 142. In this case, as exemplified in FIGS. 10A, 10B, FIGS. 11A, 10B, FIGS. 13A, 13B, and FIGS. 14A, 14B, in the mounting and fixing step, the single heating target region HT, which has been locally heated, can be inserted into both the radial groove portion 142D and the axial groove portion 142A while being deformed. In this case, the radial projecting portion 70D and the axial projecting portion 70A are included as the projecting portions 70. At the same time, the radial projecting portion 70D is arranged in the radial groove portion 142D, while the axial projecting portion 70A is arranged in the axial groove portion 142A. As compared to a case in which the single locally heated heating target region HT is inserted into the single groove portion 142 while being deformed, the two engaging portions 210 with directions of orientation of the center axes GA of the groove portions 142 being greatly different from each other can be formed at the same time. As a result, the effect of preventing the drop and the detachment of the abradable seal 10 and the effect of preventing the positional deviation can be obtained at the same time.

The groove portion 142 formed in the mounting and fixing surface 140 may be the radial groove portion 142D alone. In this case, as exemplified in FIGS. 12A and 12B, it is preferred that the auxiliary groove portion 144 having a center axis that is substantially parallel to the center axis A2 of the compressor housing main body portion 100 be formed in the mounting and fixing surface 140 of the compressor housing main body portion 100 and, at the same time, the auxiliary projecting portion 90 having a center axis that is substantially parallel to the center axis A1 of the abradable seal 10 be formed on the mounted and fixed surface 60 of the abradable seal 10. In this case, the engaging portion 210 can provide the effect of preventing the drop and the detachment of the abradable seal 10, whereas the auxiliary engaging portion 212 can provide the effect of preventing the positional deviation of the abradable seal 10.

Further, with the method for manufacturing a compressor housing according to this embodiment, as exemplified in FIGS. 11A, 11B to FIGS. 14A, 14B, before the mounting and fixing step is carried out, there may be carried out a sealing member arrangement step of arranging at least one sealing member selected from the O-ring 400 and the sealing material (sealant) 410 on at least one surface selected from the mounting and fixing surface 140 and the mounted and fixed surface 60 (a part of the surface of the abradable seal 10 facing to the mounting and fixing surface 140). As a result, the following compressor housing 200 can be obtained. That is, the compressor housing 200 includes at least one sealing member selected from the O-ring 400 and the sealing material (sealant) 410, which is arranged at the interface between the compressor housing main body portion 100 and the abradable seal 10 (interface between the mounting and fixing surface 140 and the mounted and fixed surface 60). In this case, leakage of an air via the interface between the compressor housing main body portion 100 and the abradable seal 10 can be prevented. Thus, a more excellent sealing function can be obtained.

The compressor housing 200 having a structure in which another member such as the O-ring 400 or the sealing material (sealant) 410 is arranged at the interface between the compressor housing main body portion 100 and the abradable seal 10 cannot be manufactured by the insert-molding method and the thermal spraying method. The reason is as follows. At the time of insert-molding, when a resin in a molten state is injected to fill a space surrounded by a die for molding the abradable seal and the compressor housing main body portion, the another member such as the O-ring or the sealing material (sealant), which is arranged on the mounting and fixing surface of the compressor housing main body portion, is easily moved away. With the thermal spraying method, the O-ring or the sealing material (sealant) is, for example, thermally decomposed.

Meanwhile, although the engaging portion (engaging portion including the groove portion having the center axis oriented in the axial direction of the compressor housing main body portion) having a high effect of preventing the positional deviation of the abradable seal can be easily formed by the press-fitting method, it is in principle impossible or extremely difficult to form the engaging portion having the high effect of preventing the drop or the detachment of the abradable seal (engaging portion including the groove portion having the center axis oriented in the radial direction of the compressor housing main body portion). Even by the press-fitting method, the engaging portion having the function of preventing the drop and the detachment of the abradable seal can be formed by arranging part (bulging portion) of the abradable seal in the groove portion extending in the radial direction by the compression-expansion deformation, as exemplified in Patent Literature 3. Because of the use of the compression-expansion deformation, however, the bulging amount of the bulging portion is extremely limited. Therefore, the compressor housing disclosed in Patent Literature 3 is significantly inferior to the compressor housing including the engaging portion 210 formed by the combination of the radial groove portion 142D and the radial projecting portion 70D according to this embodiment in terms of the effect of preventing the drop and the detachment of the abradable seal.

Specifically, the compressor housing 200 including the engaging portion 210 having the radial groove portion 142D and the radial projecting portion 70D (thermally deformed projecting portion DFP) arranged in the radial groove portion 142D, and including at least one sealing member selected from the O-ring and the sealing material (sealant) arranged at the interface between the compressor housing main body portion 100 and the abradable seal, cannot be substantially manufactured by the related-art methods for manufacturing a compressor housing. As the compressor housing 200 having the above-mentioned structure, the compressor housings 200C, 200D, 200E, and 200F respectively illustrated in FIGS. 11A, 11B to FIGS. 14A, 14B can be exemplified.

For the manufacture of the compressor housing 200 according to this embodiment, a fixing member such as a pin or a member for the purpose of prevention of gas leakage, such as the O-ring, is not required to be used. Specifically, the compressor housing 20 may include only the compressor housing main body portion 100 and the abradable seal 10. In this case, the number of components used for the manufacture of the compressor housing 200 can be reduced. Hence, the structure can be simplified, and productivity can be further improved at the same time.

Further, with the method for manufacturing a compressor housing according to this embodiment, a fine groove forming step of forming a fine groove by radiating a laser beam onto at least part of the inner wall surface of the groove portion 142 while scanning the laser beam may be carried out before the mounting and fixing step is carried out. In this case, when the heating target region HT, which has been softened by heating, penetrates into the groove portion 142, also the fine groove formed by laser process is filled, without a gap, with the resin material that forms the heating target region HT. Therefore, a more excellent sealing function can be obtained. In addition, the sealing member such as the O-ring 400 is not required to be used to ensure the sealing function. The fine groove formed by the laser processing is formed by scanning the laser beam in a given regular pattern. Therefore, the surface of the inner wall surface of the groove portion 142 has regularly formed surface recesses and projections. Further, the fine groove formed in the fine groove forming step is formed by the injection molding, casting, cutting work, or other processing. A depth LD of the fine groove is only required to be relatively remarkably smaller than the depth D of the groove portion 142. For example, LD/D is preferably equal to or smaller than 0.1, more preferably, equal to or smaller than 0.05. Further, an absolute value of the depth LD of the fine groove can be suitably selected from a range in which LD/D falls within the above-mentioned range, for example, within a range of from about 10 µm to about 500 µm.

The engaging portion 210, and the groove portion 142 and the projecting portion 70 that form the engaging portion 210 may be formed continuously in the circumferential direction, but may also be formed non-continuously (discretely) in the circumferential direction. In the latter case, the abradable seal 10 can be prevented from rotating in the circumferential direction with respect to the compressor housing main body portion 100. This point applies to the auxiliary engaging portion 212, and the auxiliary projecting portion 82 and the auxiliary groove portion 144 that form the auxiliary engaging portion 212.

As a material for forming the abradable seal 10, a resin material containing a resin as a main component is used. The resin material may contain the resin alone. In general, however, it is preferred that the resin material contain the resin and a filler such as graphite. As the resin, any known resin may be used. It is preferred that the resin have an adequate heat resistance. In view of the heat resistance, for example, a thermoplastic polyimide resin may be exemplified. Further, for crystallinity and non-crystallinity of the resin, it is preferred that the resin be amorphous in view of a reduction in thermal expansion coefficient. When the filler is used, a compounding ratio of the filler is not particularly limited. For example, the compounding ratio can be set to fall within a range of from about 30% by mass to about 40% by mass to a total amount of the resin material. A composition of the resin material (kind and compounding ratio of each component) can be suitably selected in accordance with a material that forms the compressor housing main body portion 100 to be used in combination with the abradable seal 10 so as to obtain desired various property values or characteristics.

As a material for forming the compressor housing main body portion 100, a known material that is used as the material for forming the compressor housing main body portion 100 can be suitably used. For example, an aluminum alloy, a magnesium alloy, a phenol resin, a polyphenylene sulfide (PPS) resin are given.

The compressor housing main body portion 100A forming the compressor housing 200 according to this embodiment, which is illustrated in FIG. 4, includes: (1) a core portion 500 including a portion in the vicinity of the mounting and fixing surface 140; (2) an inlet-side cylindrical portion 510, which is formed to be continuous to the core portion 500 and extends to the Y2 direction side; and (3) a scroll forming portion 520, which is formed to be continuous to the core portion 500 on an outer peripheral side of the core portion 500 and forms a scroll chamber S. However, the compressor housing main body portion 100 used in the method for manufacturing a compressor housing according to this embodiment is only required to include at least the core portion 500 and may include only the core portion 500.

For example, in the compressor housing main body portion 100, the core portion 500 and the scroll forming portion 520 may be different members. In this case, the compressor housing 200 can be manufactured through use of the compressor housing main body portion 100 including the core portion 500 and the inlet-side cylindrical portion 510, which are formed integrally with each other, and the abradable seal 10. When a supercharger is assembled with the compressor housing 200, the scroll forming portion 520 manufactured as a separate member from the compressor housing main body portion 100 including the core portion 500 and the inlet-side cylindrical portion 510, which are formed integrally with each other, can be mounted and fixed to the outer peripheral side of the core portion 500.

### {Reference Signs List}

10, 10A, 10B, 10C, 10D, 10E, 10F: abradable seal
20: inner peripheral surface
30: end surface
40: outer peripheral surface
40A: first surface
40B: second surface
50: projecting portion (heating target region HT)
52: angular portion (heating target region HT)
54: elevated portion (heating target region HT)
60: mounted and fixed surface
70: projecting portion (thermally deformed projecting portion DFP)
70A: axial projecting portion (thermally deformed projecting portion DFP)
70D: radial projecting portion (thermally deformed projecting portion DFP)
70T: distal end
80: groove portion
82: auxiliary projecting portion
84: tapered portion
90: auxiliary projecting portion
100, 100A, 100B, 100C, 100D, 100E: compressor housing main body portion
110: inlet opening portion
120: outlet opening portion
130: inner wall surface
130A: first region
130B: second region
130C: third region
140: mounting and fixing surface
140A: first surface
140B: second surface
140C: third surface
140D: fourth surface
142: groove portion
142A: groove portion (axial groove portion)
142BT: bottom
142D: groove portion (radial groove portion)
144: auxiliary groove portion
150: corner portion
200, 200A, 200B, 200C, 200D, 200E, 200F: compressor housing
210: engaging portion
212: auxiliary engaging portion
220: inner wall surface
300: infrared welding machine
310: casing
312: opening slit
320: infrared lamp
330: vibratory horn
332: bottom surface
400: O-ring
410: sealing material (sealant)
500: core portion
510: inlet-side cylindrical portion
520: scroll forming portion

## Claims

1. A method for manufacturing a supercharger compressor housing, comprising steps of:
heating a heating target region (HT) locally, the heating target region being a circumferentially continuous region of a ring-shaped abradable seal (10A), through use of a local heating apparatus configured to selectively heat the heating target region; and
mounting and fixing the abradable seal onto a mounting and fixing surface of a compressor housing main body portion (100),
wherein, on mounting and fixing, the heating target region having been heated locally is inserted into a groove portion (142) formed in the mounting and fixing surface (60) while being deformed; and wherein the heating target region is in the form of a projecting portion (50); the method **characterized in that**:
the local heating apparatus comprises an infrared welding machine (300) including a casing (310) having a disc-like shape and a ring-shaped infrared lamp (320) which is arranged inside the casing (310), and wherein
an opening slit (312) having a ring shape, which is continuous in the circumferential direction, is formed in one surface of the casing so as to correspond to the infrared lamp (320).

2. The method for manufacturing the super charger compressor housing according to claim 1, wherein the local heating apparatus is configured to selectively apply thermal energy to the heating target region.

3. The method for manufacturing the supercharger compressor housing according to any one of preceding claims,
wherein the groove portion comprises a radial groove portion having a center axis (GA) with an angle equal to or larger than -45 degrees and equal to or smaller than 60 degrees with respect to a radial direction around the center axis of the compressor housing main body portion (100), wherein the positive sign of the angle indicates an air inlet side of the compressor housing main body portion to the radial direction and the negative sign indicates the opposite side thereof;
wherein, on mounting and fixing, the heating target region having been heated locally is inserted into the radial groove portion while being deformed.

4. The method for manufacturing the supercharger compressor housing according to claim 3,
wherein the groove portion comprises the radial groove portion and an axial groove portion formed at a position in proximity to the radial groove portion and having a center axis with an angle larger than -30 degrees and smaller than 30 degrees with respect to an axial direction of the compressor housing main body portion, and
wherein, on mounting and fixing, the single heating target region having been heated locally is inserted into both the radial groove portion and the axial groove portion while being deformed.

5. The method for manufacturing the supercharger compressor housing according to any one of claims 1 to 4, further comprising, before mounting and fixing, a step of forming a fine groove by radiating a laser beam onto at least part of an inner wall surface of the groove portion while scanning the laser beam.

## Patentansprüche

1. Verfahren zum Herstellen eines Aufladerkompressorgehäuses, das folgende Schritte umfasst:
lokales Erhitzen eines Erhitzungszielbereichs (heat target region - HT), wobei der Erhitzungszielbereich ein fortlaufender Umfangsbereich einer ringförmigen abreibbaren Dichtung (10A), durch Verwendung einer lokalen Erhitzungseinrichtung, ist, die konfiguriert ist, um den Erhitzungszielbereich selektiv zu erhitzen; und
Montieren und Fixieren der abreibbaren Dichtung auf einer Montage- und Fixieroberfläche eines Kompressorgehäusehauptkörperabschnitts (100),
wobei, beim Montieren und Fixieren, der Erhitzungszielbereich, der lokal erhitzt wurde, in einen Nutabschnitt (142) eingeführt wird, der in der Montage- und Fixieroberfläche (60) ausgebildet ist, während er verformt wird; und wobei der Erhitzungszielbereich in der Form eines vorstehenden Abschnitts (50) ist; wobei das Verfahren **dadurch gekennzeichnet ist, dass**:
die lokale Heizeinrichtung eine Infrarotschweißmaschine (300) umfasst, die eine Hülle (310), die eine scheibenartigen Form aufweist, und eine ringförmige Infrarotlampe (320) beinhaltet, die innerhalb der Hülle (310) angeordnet ist, und wobei
ein Öffnungsschlitz (312), der eine Ringform aufweist, die in der Umfangsrichtung fortlaufend ist, in einer Oberfläche der Hülle so ausgebildet ist, sodass er mit der Infrarotlampe (320) übereinstimmt.

2. Verfahren zum Herstellen des Aufladerkompressorgehäuses nach Anspruch 1, wobei die lokale Heizeinrichtung konfiguriert ist, um Wärmeenergie auf den Heizzielbereich selektiv aufzubringen.

3. Verfahren zum Herstellen des Aufladerkompressorgehäuses nach einem der vorhergehenden Ansprüche,
wobei der Nutabschnitt einen radialen Nutabschnitt umfasst, der eine Mittelachse (GA) mit einem Winkel gleich oder größer als -45 Grad und gleich oder kleiner als 60 Grad hinsichtlich einer radialen Richtung um die Mittelachse des Kompressorgehäusehauptkörperabschnitts (100) aufweist, wobei das positive Zeichen des Winkels eine Lufteinlassseite des Kompressorgehäusehauptkörperabschnitts zu der radialen Richtung angibt und das negative Zeichen die gegenüberliegende Seite davon angibt;
wobei, beim Montieren und Fixieren, der Erhitzungszielbereich, der lokal erhitzt wurde, in den radialen Nutabschnitt eingeführt wird, während er verformt wird.

4. Verfahren zum Herstellen des Aufladerkompressorgehäuses nach Anspruch 3,
wobei der Nutabschnitt den radialen Nutabschnitt und einen axialen Nutabschnitt umfasst, der an einer Position in der Nähe des radialen Nutabschnitts ausgebildet ist und eine Mittelachse mit einem Winkel größer als -30 Grad und kleiner als 30 Grad hinsichtlich einer axialen Richtung des Kompressorgehäusehauptkörperabschnitts aufweist, und
wobei, beim Montieren und Fixieren, der einzelne Erhitzungszielbereich, der lokal erhitzt wurde, sowohl in den radialen Nutabschnitt als auch den axialen Nutabschnitt eingeführt wird, während er verformt wird.

5. Verfahren zum Herstellen des Aufladerkompressorgehäuses nach einem der Ansprüche 1 bis 4, das ferner, vor dem Montieren und Fixieren, einen Schritt des Ausbildens einer feinen Nut durch Strahlen eines Laserstrahls auf wenigstens einen Teil einer Innenwandoberfläche des Nutabschnitts, während der Laserstrahl gescannt wird, umfasst.

## Revendications

1. Procédé permettant la fabrication d'un carter de compresseur de surcompresseur, comprenant les étapes consistant à :
chauffer localement une région cible de chauffage (HT), la région cible de chauffage étant une région circonférentiellement continue d'un joint abradable en forme d'anneau (10A), par l'utilisation d'un appareil de chauffage local conçu pour chauffer sélectivement la région cible de chauffage ; et
monter et fixer le joint abradable sur une surface de montage et de fixation d'une partie de corps principal de carter de compresseur (100),
dans lequel, lors du montage et de la fixation, la région cible de chauffage ayant été chauffée localement est insérée dans une partie de rainure (142) formée dans la surface de montage et de fixation (60) tout en étant déformée ; et dans lequel la région cible de chauffage est sous la forme d'une partie saillante (50) ; le procédé étant **caractérisé en ce que** :
l'appareil de chauffage local comprend une machine de soudage infrarouge (300) comportant un boîtier (310) ayant une forme de disque et une lampe infrarouge (320) en forme d'anneau qui est disposée à l'intérieur du boîtier (310), et dans lequel
une fente d'ouverture (312) ayant une forme d'anneau, qui est continue dans la direction circonférentielle, est formée dans une surface du boîtier de manière à correspondre à la lampe infrarouge (320).

2. Procédé permettant la fabrication du carter de compresseur de surcompresseur selon la revendication 1, dans lequel l'appareil de chauffage local est conçu pour appliquer sélectivement de l'énergie thermique à la région cible de chauffage.

3. Procédé permettant la fabrication du carter de compresseur de surcompresseur selon l'une quelconque des revendications précédentes,
dans lequel la partie de rainure comprend une partie de rainure radiale ayant un axe central (GA) avec un angle égal ou supérieur à -45 degrés et égal ou inférieur à 60 degrés par rapport à une direction radiale autour de l'axe central de la partie de corps principal de carter de compresseur (100), dans lequel le signe positif de l'angle indique un côté d'entrée d'air de la partie de corps principal de carter de compresseur dans la direction radiale et le signe négatif indique le côté opposé à celui-ci ;
dans lequel, lors du montage et de la fixation, la région cible de chauffage ayant été chauffée localement est insérée dans la partie de rainure radiale tout en étant déformée.

4. Procédé permettant la fabrication du carter de compresseur de surcompresseur selon la revendication 3,
dans lequel la partie de rainure comprend la partie de rainure radiale et une partie de rainure axiale formée à une position à proximité de la partie de rainure radiale et ayant un axe central avec un angle supérieur à -30 degrés et inférieur à 30 degrés par rapport à une direction axiale de la partie de corps principal de carter de compresseur, et
dans lequel, lors du montage et de la fixation, la région cible de chauffage unique ayant été chauffée localement est insérée à la fois dans la partie de rainure radiale et dans la partie de rainure axiale tout en étant déformée.

5. Procédé permettant la fabrication du carter de compresseur de surcompresseur selon l'une quelconque des revendications 1 à 4, comprenant en outre, avant le montage et la fixation, une étape de formation d'une rainure fine en irradiant un faisceau laser sur au moins une partie d'une surface de paroi interne de la partie de rainure pendant le balayage du faisceau laser.
